# EUROPEAN PATENT APPLICATION

(11) **EP 1 439 481 A2**
(43) Date of publication of application: **21.07.2004**
(21) Application number: 04100084.5
(22) Date of filing: 12.01.2004
(51) Int. Cl.: G06F 17/60

(54) **Method and system to perform work units through action and resource entities.**

(30) Priority: 13.01.2003 US 340887
(71) Applicant: Uljttenbroek, Adriaan, 2353MV Leiderdorp (NL)
(72) Inventor: Uljttenbroek, Adriaan, 2353MV Leiderdorp (NL)

(57) **Abstract**

The method is based on identifying each separate execution of a business process and its actions and sub actions as work units. Types of work units are projects, cases, periods, assignments, tasks, work orders, performing a service, sales orders, jobs and so on. Work unit actions process inputs to produce a desired result or output. The method is further based on making use of entities which model work units, work unit actions and resources or assets, like customers, suppliers, human resources, machines, tools, data sets, money and rules. The information processing for entities is automated using entity oriented software components. The invention makes it possible to have one fixed application architecture for all types of enterprise applications. Customization of automated entities, as needed to cater for the requirements of different organizations, is achieved by having custom business process structures in a configuration database, custom attribute field tables for entities, custom input and output/results field tables for entities, custom business rules specified in structured natural language and custom entity action repertoires as entity component extensions. Resource planning is achieved by setting up work unit templates and scheduling the use of resources they need to perform their actions. Role-based security determines each user's degree of access to the work units.

## Description

### CROSS REFERENCE TO RELATED APPLICATIONS

I claim benefit of provisional application for patent number 60/405,881 filed on August 26, 2002.

### FEDERALLY SPONSORED RESEARCH: Not Applicable

### SEQUENCE LISTING OR PROGRAM: Not Applicable

### BACKGROUND OF THE INVENTION―TECHNICAL FIELD OF INVENTION

The invention relates to a method and system to realize enterprise wide applications which automate the processing of information needed to perform business processes.

### BACKGROUND OF THE INVENTION

Most business activities can be seen as processes which process inputs to produce outputs, which in turn become inputs for other processes. Each process may consist of sub processes, which have the same characteristics as the processes themselves. These processes are sometimes referred to as workflow processes, signifying that there is a work unit to be carried out in a number of steps or actions to produce some desirable result. With the advent of network infrastructures such as the Internet, the feasibility of using a process oriented approach to business activities has become greater because of the way people can communicate with each other and have access to information. Even though this is the case, the application of business process oriented approaches and the automation of business activities in general has not reached its full potential. There are several reasons for this:
- The flexibility of present business process oriented systems has been less than users require. They are often difficult to adapt to changing circumstances, are too restrictive on the actions of the user, require too much discipline to use, are only usable in administrative environments, and are limited in functionality.
- In ERP Enterprise Resource Planning applications, CRM Customer Relations Management and SCM Supply Chain Management environments, business process oriented systems have been difficult and costly to implement. On one hand it is difficult to design them with the needed functionality and on the other hand changing them is problematic.

In today's interconnected society of organizational unit-to-organizational unit, business-to-business and business-to-consumer Internet based systems, the continued need of organizations to reduce cost, the increased complexity of business activities and the constant change of the business environment would benefit from:
- An enhanced way of computer assisted, network based personal communication and group/team oriented work.
- A better way to keep track of activities and the use of scarce resources.
- A better way to measure performance of actions and all types of resources which are needed to carry out these actions.
- A better way to change the architecture of business activities in response to changes in business models and concepts.

Classic organizational theory has given us concepts like hierarchical organizations, business processes, performance measurement and so on. They are based on structuring the exercise of management authority and decomposing the work in manageable units. In such classic organizations, information is slow to reach the workers that need it. Close personal supervision is needed to make sure objectives are adhered to, learning new tasks is assured and performance is monitored. When BPR Business Process Re-engineering and the use of information infrastructures gained widespread acceptance in the early 1990's, new approaches were introduced to deal with structuring the work, communication and the way management authority is exercised. These approaches have been very important in achieving economic growth, making organizations healthier, increasing competition and improving career opportunities for everybody. Still, important problems remain and new problems have surfaced:
- The average complexity and rate of change of almost all types of work has increased substantially.
- The need to manage activities within narrow cost ranges has led to a tendency to overload workers with tasks.
- The shortage of qualified workers capable of working effectively in a complex environment is endangering further growth. This makes enabling business activities with information technology to streamline the workload, a priority.
- Although customers have more choice, service to the customer has decreased.
- The rate of change of the average business model has increased enormously, especially in businesses where information technology is essential in the performance of work.
- Consequently, risks to continuity have increased in most organizations.

When we single out what is most different in the modem organization as compared to the classic organization, it must be the ability to communicate and process information in real time at any time and in any place through information infrastructures, rather than through chains of people.

A new organizational framework based on the benefits of efficient communication and processing of information, which takes the above into account, should satisfy the following requirements:
- Networks of activities must be possible where the topology of the network structure is primarily dependent on the efficient flow of work.
- Management should as much as possible be based on the delivery of results. Measurement of activity performance and resulting changes in parameters or activity behavior should assure objectivity and balance of organizational performance.
- Delegation of authority should be possible in the interest of achieving optimal working conditions and improving productivity.
- Management, development, maintenance and operation of business actions and all types of resources must be integrated in one approach.

In order to implement the advantages of new information technology to modern organizations based on processes rather than on hierarchical entities, a focus is needed on:
- Processes, consisting of a number of actions and/or sub actions which in turn are able to perform a number of sub actions. These should be able to be arranged in flexible sequences, from serial to parallel and dynamically determined sequences. A process should be able to handle a number of work units, which may also be of different types.
- Work units and sub work units, to allow for effective management of the work.
- Resources, as they are needed by the steps/actions to produce the outputs based on the inputs. Resources should have an extensive repertoire of actions they are able to perform.

### SUMMARY OF THE INVENTION

1. A process or action (something to do) may have a number of work units associated with it which identify each separate execution of the action. The action may have a number of sub actions which detail or decompose the action into smaller elements. Each of the sub actions may also have a number of sub work units associated with it. Types of work units are projects, cases, periods, assignments, tasks, work orders, performing a service, sales orders, jobs and so on. A hierarchy or tree of actions and associated work units reflects the way the processes of an organization or part thereof are managed. The actions at the lowest level in the hierarchy lead to an entity processing inputs to produce results or outputs. The actions above this level group actions in higher levels for management purposes. A result can also be an operational state change of an action or an entity. This action may again be 'subbed' into other actions. Actions require the use of various types of resources in order to be performed. Work units, actions and resources together describe the business process hierarchy, the infrastructure and the work load of an organization. New work units are started by having template work units and actions. Resources needed to perform work units may be scheduled by a scheduling mechanism.
2. The method makes use of entities to handle the work to be performed as part of a work unit. *Work unit entities* manage the tree of work units and actions. *Action entities* process the inputs to give results or outputs of actions at the lowest level of the work unit/action hierarchy. They may require the use of *resource* (or *asset) entities* which have a repertoire of actions they can perform or help perform, particular to the type of entity and as needed by the action entities. Resource entities are customers, suppliers, human resources, machines, tools, parts, information resources, money or business rules. *Collections* are sets of entities of one type. Entities make it possible to describe whatever needs to be done in an organization and to manage what needs to be done.
3. In an embodiment of the invention (the system) the structure obtained by describing the organization according to the above method is mapped one-to-one onto software components, called entity components, in such a way as to implement all necessary information processing for work unit, action and resource entities. There is a *work unit entity component* which implements the information processing needs of the hierarchy of work units, using one software component and several tables in a database (the configuration database). The work unit entity component can be recursively called making it possible to handle the hierarchy of work units and actions with just one component. For each action and each resource entity type there is one component and several tables in a database (the application database), which implements the information processing needs of each collection of entities of the particular type. The components implement the business rules passed on to them by the work unit control component by calling an appropriate business rule processor. The work units and actions managed by the work unit entity component form the calling menu to call other entity components.
4. Using the above scheme it is possible to arrive at a Fixed Application Architecture. This means that each organization using the invention can be automated using just one application architecture. The architecture consists of:
   - Templates for work units and work unit actions which specify how for a particular organization work is to be performed. These are held in tables (the configuration database). There is a *work unit and work unit actions setup component* which makes it possible to specify resource usage. Work units can be of many different types, as shown above.
   - Tables to manage actual work units and work unit actions, as well as templates for work unit actions and a *work unit entity component,* which manages the work units. Actions begin by receiving orders to make a product or perform a service and result in changes in data (value and state changes) in the tables describing the collections of entities. These results are inputs to further actions, which are called under control of the user or by the same or other components, until finally a result is made available to the client of the organization.
   - *Action entity components* which handle actions to be performed for the different work unit types. These make use of the actual work unit and work unit actions tables.
   - *Resource entity components* which handle actions particular for the resource type. These make use of tables describing collections of resources (or assets).
   - *A work unit scheduling entity component.* When some types of work have to be specifically scheduled to use available resources effectively, as is for instance the case for most factory, services and logistics businesses, types of orders to be handled are maintained as a collection of *master production and master service schedules.* They consist of template work units to deal with the particular types of orders to be scheduled. Each work unit template specifies the required resources ('reusable' entities like machines, human resources) and parts (non-reusable or consumable entities). Scheduling consists of setting the planned begin and end date/times for each action and each resource as well as the time parts have to be available from the inventory.
   - *Custom field tables* make it possible to add any number of detail or attribute data to entities.
   - *Custom input and output*/*result tables* make it possible to have the right inputs and outputs for action entities.
   - *Custom business rules processors* process the different types of structured natural language action strings to customize business rules.
   - *Custom entity action repertoire extensions,* to add custom functionality to action and resource entities.
   These architectural elements are the same for each type of application. A minimum set consists of a work unit and work unit actions setup component, work unit entity component, action entities and resource entities. Organizational specificity of work units and actions is thus achieved by setting up an appropriate configuration database. Organizational specificity of entity component functionality is obtained by having entity action repertoire extensions, custom field tables for work unit, action and resource entity components and business rule processing or functionality is obtained by action string processors.
5. The invention has the following important advantages:
   - Inherent identification and management of work units, which double up as menu items in the user interface. Assignment of responsibilities for each work unit; keeping start and end dates, financial information and performance scores gives quality control capabilities.
   - Entity components implementing the information processing requirements of lowest level hierarchy actions and resources/assets can be standardized, with none or few changes from one application to another.
   - A fixed system implementation pattern, provided by the Fixed Application Architecture, shortens or eliminates the traditional custom system development cycle. This may be supported by knowledge bases of standard business processes and standard entity components to further shorten development time.

### BRIEF DESCRIPTION OF THE DRAWINGS

- FIGURE 1.: A hierarchical structure.
- FIGURE 2.: A network structure.
- FIGURE 3.: Actions and resources and the various infrastructures.
- FIGURE 4.: Organization chart overlaying a process chart.
- FIGURE 5.: Management or control concept.
- FIGURE 6.: Execution threads in a process network.
- FIGURE 7.: Actionstring for condition zero.
- FIGURE 8.: Actionstring for condition one.
- FIGURE 9.: Elements of an action.
- FIGURE 10.: Sample Hierarchy of Work Units and Actions per Work Unit.
- FIGURE 11.: Performing Work Units where Svs is Services,Res is Resources, Cust is Customers, Supps is Suppliers, DSs is data sets, Rls is Rules and Accs is Accounts.
- FIGURE 12.: A process.
- FIGURE 13.: A network of processes.
- FIGURE 14.: A resource entity SalesClerk..
- FIGURE 15.: A network of resources.
- FIGURE 16.: A process of actions each consisting of an action string which calls entities (resources)to perform required functions.
- FIGURE 17.: This figure illustrates the overall logical composition of an embodiment of the method and system.

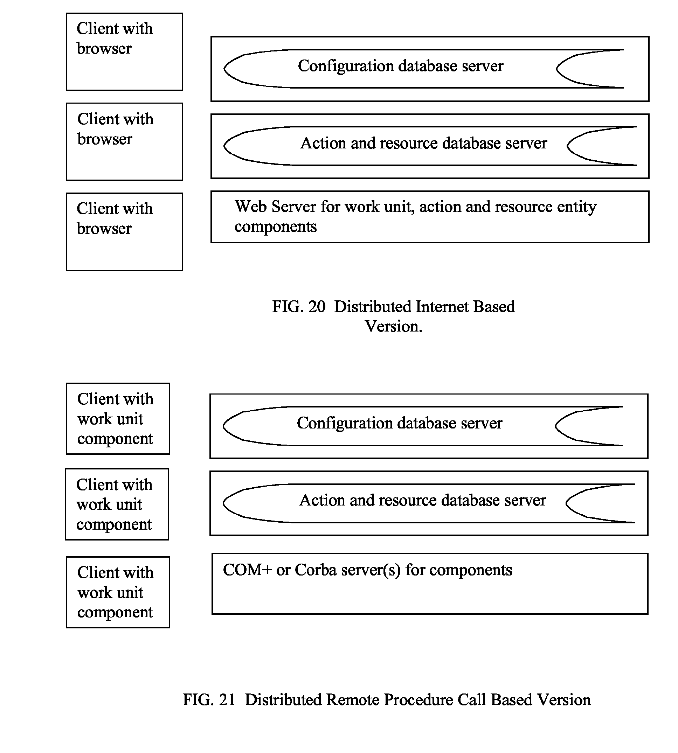

- FIGURE 18 to 21: illustrate the various possible physical compositions of an embodiment of the method and system.
- FIGURE 22: details the login steps to be performed by the user.
- FIGURE 23: shows a typical session of the user with the system.
- FIGURE 24: details the display of action states which guide the user in determining what to do.
- FIGURE 25: and 25A detail the selection by the user of a particular action to be performed.
- FIGURE 26: shows how the system executes an action string.
- FIGURE 27: shows how a user can setup a new configuration database, implementing a new system.

### DETAILED DESCRIPTION OF THE INVENTION

In order to describe the invention the *organizational model* to be used will be defined, then a novel way of representing an organization in structured natural text *action strings* will be explained, then how managing work takes place using the invention's *work units,* followed by a description of *entities.* Next, the way the approach leads to processing information using *fixed application architecture* is described. Then *customization* is addressed and lastly a way to *implement* a system according to the invention is presented.

### Organizational Model

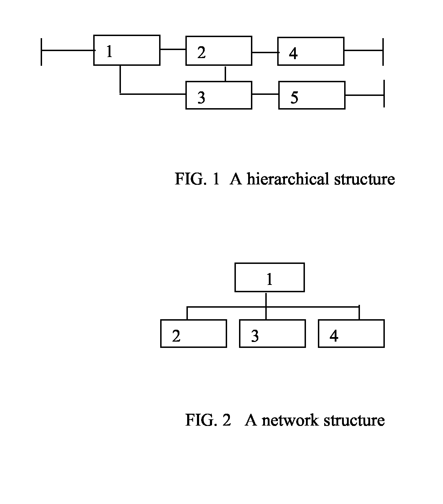

First we explain what we mean by structure. A structure consists of boxes and relations between them. Organizations, infrastructures, services, products, networks, software packages, people, machines, nature, in short nearly everything has a structure. The structure may be shown graphically, or by other symbolic means such as letters and numbers. Structures may have types, as in hierarchical, network, star, one dimensional, three dimensional, and so on. We will deal mainly with hierarchical and network types of structures. Figure 1 shows a hierarchical structure, figure 2 a network structure.

A box depicts an *action entity* or a *resource entity,* the lines between them indicate *relations.* A vertical line means that the figure ends there, it is called a *terminator* (a special entity). Generally we will use graphical means to show structures. The lines between boxes in a network structure are usually inputs and outputs, since the boxes usually are process, action or resource entities.

When a hierarchical structure indicates an organization or process or action chart the lines indicate authority. In figure 1 the processes or actions which are part of box 1 have a measure of authority (or control) over the processes or actions of box 2. When a hierarchical structure indicates an entity like a machine or a computer program, the lines indicate 'parts' of a whole. Thus box 2 is part of box 1.

To structure an organization use is made of 'structural criteria'. A criterion in this sense is a constraint to be imposed on a structure. For instance if we want a centrally controlled organization, then the criterion to be used may be: 'all main operational processes need to be managed by a central management process'. Another example is the following criterion, to be used to structure a customer support process: 'the response to a customer complaint must be within 2 hours' and 'conform to an ISO 15504 managed process'. Or, for a physical entity, 'the size of the engine should not exceed 3 by 2 by 2'.

An organization performs processes or actions (we use these terms interchangeably), which are executed by action entities and/or resource or asset entities. An entity has a repertoire of actions it can execute. So, depending on the type of action, an appropriate entity must be found. In an organization many actions need to be performed. The actions, like 'enter data' or 'make product', are structured in a way that makes sense, so that an overall objective, like 'realizing the objectives' or 'satisfying a customer need', can be met. There are a number of types of *action structures* one can discern in an organization. The most important ones for our purpose are:
- The process or action structure, its main purpose being the delivery of the service or product to a customer or user. Processes group actions and are grouped in network structures.
- The organizational structure, also called the management or control structure, groups processes in organizational units. This hierarchical structure is devised to make sure the organization can be controlled effectively. Processes may span the boundaries of several organizational units. Organizational units can be divisions, departments, locations. Depending on the way management wants to control the organization, management processes are added to the process structure. We make use of work units to uniquely identify work periods, sessions, projects, making a product, performing a service, cases, orders, etcetera.

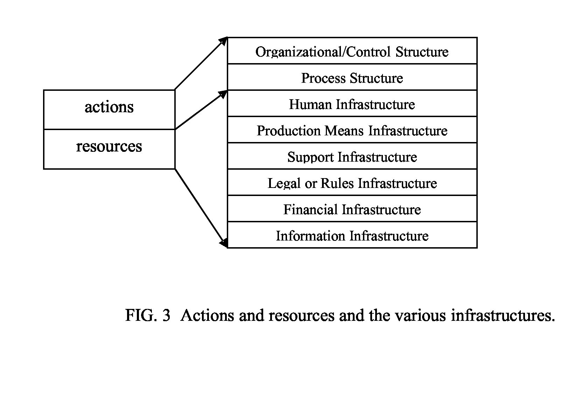

In essence the control and process structures consist only of structured actions. The resources needed to carry out the actions, like people, machines, buildings, information, money, rules and what not, are grouped in *infrastructures.* Without them no action can be performed. We recognize the following six types. See figure 3.
- The human infrastructure, the indispensable and most essential resource of any organization.
- The production means infrastructure, the machines needed to help transform inputs into outputs.
- The support infrastructure, the tools, buildings, energy, fluids, materials needed to help produce the service or product.
- The legal or rules infrastructure, the laws, articles of incorporation, procedures, contracts needed or required to carry out the business.
- The financial infrastructure, the revenues, costs, assets and debts needed to run the business. The financial infrastructure reflects most of the other ones, in that everything has a monetary aspect to it.
- The information infrastructure, consisting of two parts:
   o the network infrastructure, which consists of the physical entities needed to process information, like PC's, servers, mainframes, system software, and
   o the application infrastructure, which consists of application software components and databases, reflects or mirrors in some way all the infrastructures mentioned above.

The structure of an organization as a whole is made up of the various structures as shown in figure 3, together describing the most important actions and resource entities of the organization.

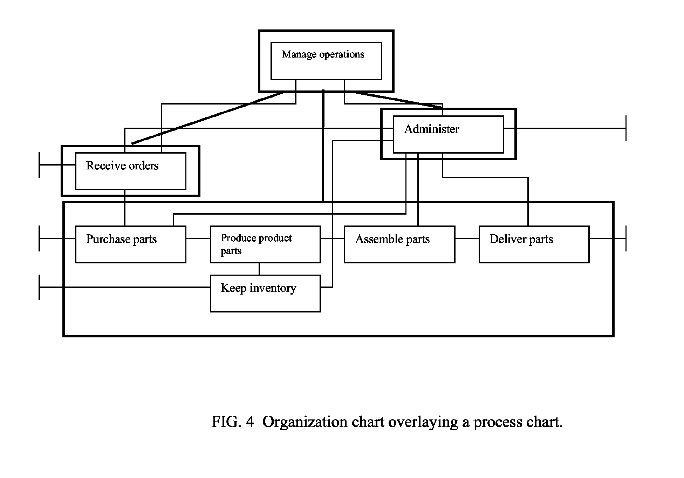

Figure 4 shows how an organization chart can overlay a process chart.

A process or action as discussed before consists of a number of (sub) actions grouped in a network structure (described by an action string). One action is processed by one actor entity, but may also consist of a number of sub actions the behavior of which is expressed by another action string.

Processes come in different flavors:
- primary or operational processes, those that are directly involved in producing the service or the product of the organization,
- secondary or support processes, those that help the primary ones do their job,
- management or control processes, those that are needed to effectively control the operation of the organization.

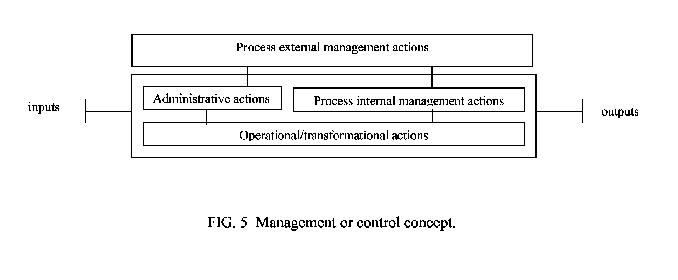

Management of processes is shown in figure 5. Each process consists of operational or transformational actions. Each process also has a certain degree of freedom to handle its own affairs. This means that each process must administer information to track progress and performance. To this end it has a number of administrative actions to carry out. It also has a predefined number of process-internal management actions it must or can perform. The process-external management or control actions depend on what is handled internally to the process. These may range from setting objectives and performance assessment to giving detailed instructions about the actions to perform.

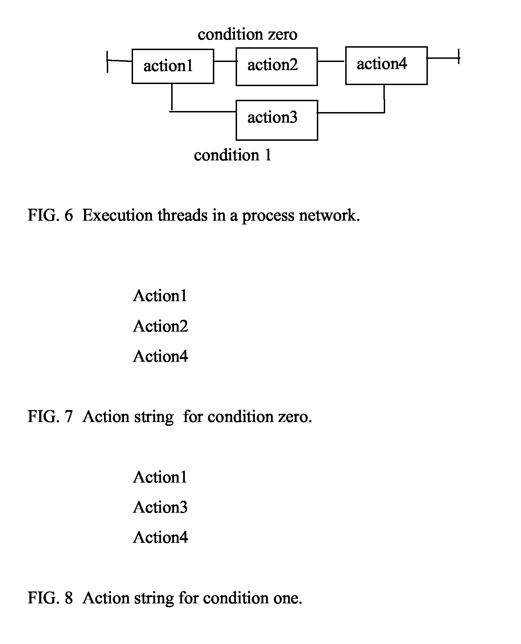

The actions of a process may have to be sequentially executed or (some) may (have to) be executed in parallel. Some may not need to be executed based on conditions which arise or that have been set at the outset. Sometimes the actions can be performed in any sequence or may have to be executed in a sequence particular to the circumstances, up to the resources (people) to determine. Management can leave it up to the process workers to determine the sequence of actions to be performed, or can specifically require which actions are to be executed in which sequence. This is called 'user directed' or 'directed user' performance. The 'execution thread' (see figures 6, 7 and 8) of the actions of a process may be shown as:
- a network, with a beginning and an end, or
- a number of action strings, each string showing the linear sequence of actions to be performed for each particular circumstance.

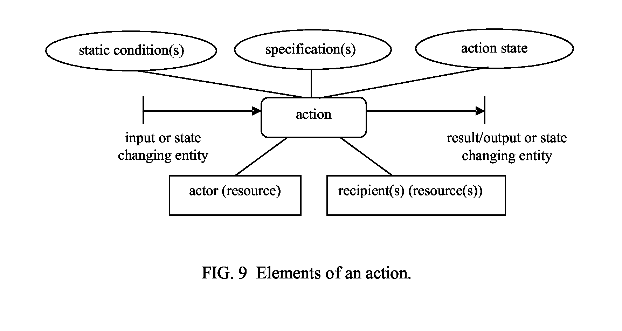

The smallest process building bloc is the action entity. The smallest infrastructure building bloc is the resource entity. Action and resource entities have repertoires of actions they can perform. Figure 9 shows the elements of an action.

The *action entity* is shown as a box with rounded corners to distinguish it from the resource entities, shown as boxes with sharp comers. The action is that which is being done or performed.

The action is performed by the *actor* entity (a person, machine, animal, computer program). The action is applied to and by the actor itself or to one or more *recipient* entities, as in:
**Action** Drive, Actor Driver, Recipient Car.
The recipient resource is *passive,* i.e. it undergoes the action or is needed for it (like a tool). When a recipient resource reacts to the action it requires an additional *action sentence.* Its reaction is then viewed as a separate action, as in:
**Action** DriveCar, Actor Driver.
**Action** RespondToDriveCommands, Actor Car.

The recipient entity does not need to be mentioned in that case. In most cases the actor is also the recipient (the actor does not need a tool).

The *input* can be anything: raw materials, parts, information, a decision, a patient in a hospital, energy, fluid, a student at a university. Inputs can also be control inputs or (dynamic) conditions such as the processing speed must be 4 units per minute.

The *output* or *result* can be anything as well. It is the input to which value has been added and which must conform to some quality, performance, or capability objective. Outputs can be measurements: the output rate is 5 units per minute. Outputs can also be waste materials. Inputs as well as outputs can also be a changed state of some entity.

A *static condition* is an attribute of the action and is used to determine whether the action will be performed or not or if the output is to be delivered. This could be a certain time at which the action is to be executed, if certain inputs are allowed, the quality the output has to have, etcetera. These are static as compared to *dynamic conditions* which are conditions which change as a result of inputs supplied to the action.

A *specification* gives details about any of the other elements of the action. For instance: 'specification actor=male', or 'specification action=uninterruptible', or 'specification recipient > 1000kg'.

The *state(s)* of the action is (are) also an attribute and are also of importance. An example is: the action is 'operational', 'in development', 'down'. These are called *existence* states and say something about the ability to apply the action. *Operational* states are states that indicate the progress or situation the action is in. An example is the 'initial' state, or the 'wait for input' state, or the 'no more input' state, or 'done', or 'suspended'. Both static conditions and states may be used by the action to modulate its behavior depending on the situation. Dynamic conditions and control inputs originate from outside the action and are determined by other actions.

Actions can be at a high abstraction level, like 'UpdateClientDatabase', or can be at a very low abstraction level, like 'HandleCPUInterrupt'. ClientDatabase is an example of a state changing entity.

The description of processes follows the same rules as the description of actions. A process is basically the same as an action (albeit a 'big' one).

An example of describing an action, using structured natural language, is the following.
**Action** MaintainMachine, actor MaintenanceDepartment,
condition Starttime=100103,
condition Endtime=100503,
condition Cost<500,
input MaintenanceOrder,
output MachineState=UpAndRunning.

An entity is described by giving it a name and describing its attributes. There are three types of attributes:
- those *that specify the actions* it can perform, like 'ConvertData', 'CleanHouse', 'DigHoles', 'SellProducts', also called the functionality,
- those that specify the relevant *form* and *composition* factors, like size, shape, weight, color, materials used, chemical reactivity, price and
- those that possibly *modify behavior,* like a condition, or those that describe its various states, which are also used to determine or modify future behavior.

A short example of describing a resource, using natural language, is the following:
**Entity** Car.
- *Actions:*
   o TransportPassengers.
   o TransportCargo.
- *Composition attributes:*
   o ColorBlue.
   o 400 hp.
   o 3000lbs.
   o 4 passenger capacity.
   o Driver.
   o Gasoline.
- *Condition attributes:*
   o Maintenance every 6 months.

An entity will have a structure. The structural elements may each have attributes relevant to the performance of actions, making them 'sub entities' or 'sub resources'. Entities also may have states which influence the actions to be executed.

An action (process) entity delivers a result, this can be a product or a service performed. We say that an organization delivers products or services or both. The same is true internal to the organization. Each process delivers either a product or a service to another process. Score cards may be used to measure performance, using generally accepted standards (i.e. ISO1554).

Inputs and outputs may be information, materials, parts, energy, fluids, people, and etcetera. They may have structures and be like entities and can be measured using the same criteria. In general they are resource entities, just like resources and products. Depending on their role we use appropriate words for them. An input may become an entity (resource) during a process. For instance when a process makes a tool and that tool is subsequently used in the remaining actions of the process, it has become a (resource) entity.

### Work Units

Work units are: making a product, performing a service, executing a project, a work period, a case, a work session, a job, a sales order, a work order, a task, an assignment, and so on. A work unit in our definition is a separate execution of a process or action. Thus the making of products, performing services, projects, work periods, cases, work sessions, jobs, sales orders, work orders, tasks, assignments, and so on, are instances of processes or actions. The invention therefore makes no fundamental difference between making products, performing services, orders, projects, etc., thereby simplifying design. Processes consist of a number of actions, sub actions and so on. In our definition there is also no fundamental difference between a process, an action, a sub action and so on. Each action can consist of any number of sub actions and these of any number of sub sub actions and so forth. Whatever has to be done in any type of organization can be modeled with this type of action. When furthermore each separate execution of an action is identified as a work unit, all work performed in the organization can be managed by following work units. The invention's system implementing this method makes use of just one table containing rows describing the actions of the organization, its sub actions and so forth. Since each action has the same characteristics it is sufficient to have one field per row saying to which action this action is a sub. The hierarchy of actions which describe the structure of the organization's actions (or processes) is thus kept in this single template 'actions table'. When a new separate execution of an action (or process) is to be performed (for instance a new work order is to be carried out) a new entry is entered in the 'work unit table', identifying which action (process) it concerns. At the same time a new entry is made to the 'work unit actions table' by copying the entry from the actions table, identifying which sub actions are to be performed for this work unit (if any). Work units and work unit actions are shown on one screen and form a menu of things to do. Clicking on an action may give rise to a call to an entity component for performance (processing input to produce results or outputs) of the action. On the other hand a click on an action may also call a next lower level of work units for this action, thereby making possible an infinite number of hierarchical work unit levels. The invention thus makes it possible to model any type of organizational action (process) structure and identifies each separate execution of these actions by a work unit. It does so by keeping data in three tables in a database (the configuration database). These tables thus maintain two linked hierarchies: the template action hierarchy and the work unit/work unit actions hierarchy.

The actions of a work unit may lead to lower level work units and actions, but may also lead to calling an entity processing inputs to produce results/outputs. When this is the case the calling action is at the lowest level of the work unit/work unit action hierarchy. This means that some actions of the work unit may lead to lower levels of work units while others may lead to actually performing an action.

Each action entry in the template action table also has a field which contains an action string. This action string tells the entity component called which sub actions to perform and their sequence. If the action is to call a lower level of work units and their actions, the action string determines in which sequence these sub actions must be carried out. Every time an action is completed a completion state may be returned to the calling action, allowing for determination of the next action to be performed. Each work unit action keeps a field which records its state, for instance inactive, active, done, alternatively done, doanytime, next or problem. These states may be color coded, so that progress of a particular work unit can be visually presented. Further details of action strings are given in the section of this patent application describing customization.

The information kept for each work unit is as follows:
Identification, description, work unit type (project, service, product manufacture, etc), level in the hierarchy, of which work unit it is a sub, which action (process) it concerns, which group of users has access to this type of work unit, the operational state, a mode to indicate if other users may perform this work unit, the user who is responsible for the work unit, his role, his access rights (read, new, update, delete rights), actual start and end dates, planned start and end dates, actual time and material costs, planned time and material costs, actual time units, planned time units and a processing state which indicates if the work unit is being used.

The information kept for each action is:
The work unit this action belongs to, of which work unit this is a sub, the type of work unit this action belongs to, the action identification itself, the actor to be called to carry out the action, the action of which this action is a sub, the group of users which may perform this action, the operational state of this action, if the action may be carried out several times, the user, his role and his access rights, the action string and the sequence number of this action.

The information processing of work units, work unit actions and action templates is handled by just one work unit control component. When a new level of work units is called a new copy of the work unit control component is generated to handle it. Thus any number of action (or process) levels may be handled.

When a user enters his name, role and password it is checked against a user table for validity by a work unit entity component. Access rights to work units are from thereon handled by the action component.

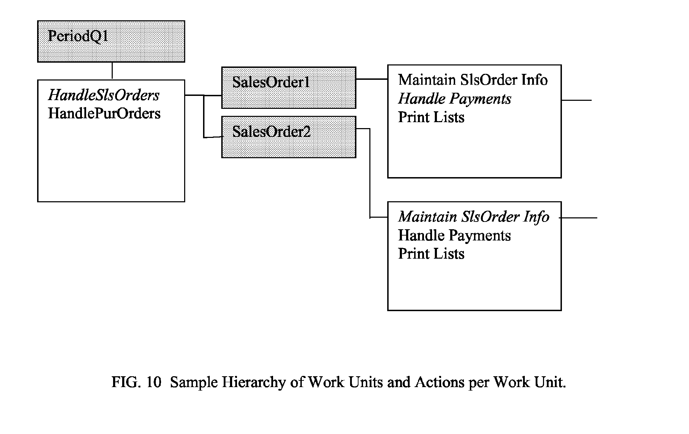

Figure 10 shows how the work unit/action hierarchies work together. The grey boxes indicate work units, the white boxes lists of actions. Italic text indicates an active action. The PeriodQ1 has two actions: Handle Sales Orders and Handle Purchase Orders. Handle Sales Orders is active, it has two work units associated with it: SalesOrder1 and SalesOrder2. Both sales orders have three actions to perform. Of SalesOrder1 HandlePayments is active, of SalesOrder2 MaintainSIsOrderInfo is active.

The color code of an action indicates its state of execution. Figure 10 is not in color, but when an action is colored yellow it can be performed at any time. A white colored action is 'done', a green action is next in line to be executed. A black action is 'inactive'. A grey action is also 'done' but in an alternative way. This makes it possible to decide on another action to perform next rather than the next one in the list (the list is an action string as described previously).

In the following example we indicate a work unit/action hierarchy for a ProjectA, which has the actions:
Plan Work, PerformTasks, FinishProject. The action PerformTasks could have sub work units ProjectADataBaseDesign and ProjectAComponentProgramming. ProjectADataBaseDesign could have the actions: CollectDataItems, DescribeTables. ProjectAComponentProgramming could have the actions: WriteSpecs, ProgramCode. In our structured natural language action string this business rule would be described as follows (WU stands for work unit):
   **Action** StartProjectWU, **actor** ProjectManager.
      **Action** PlanWork **actor** ProjectManager.
      **Action** PerformTasks.
      **Action** StartProjectADataBaseDesignWU, **actor** DBDesigner.
      Action CollectDataItems.
      **Action** DescribeTables.
      **Action** StartProjectAComponentProgrammingWU, **actor** Programmer.
      Action WriteSpecs.
      **Action** ProgramCode.
      **Action** FinishProject, **actor** ProjectManager.

The first actions tring consists of one action, expressed by one action sentence StartProjectWU. The second action string consists of three actions: Plan Work, PerformTasks and FinishProject. The third has two actions: CollectDataItems and DescribeTables. The fourth action also has two actions: WriteSpecs and ProgramCode. Each action may thus be subbed by another work unit and corresponding action string, making it possible to go to any depth of description. In this example it is assumed that no control of the sequence of execution of the actions is needed (there are no 'next' sentence elements).

### Entities

There are three basic types of entities: the work unit entity the action entity and the resource entity type. The resource (or asset) entity may have sub types for the various types of resources. The details of work unit entities were described in the previous section of this patent application. They are 'things', capable of performing an action or undergoing an action. An office is for instance seen as an entity which undergoes the action of handling administrative work. Sub types of resources or assets are customers, suppliers, human resources, machines, tools, computers, animals, loans, budgets, profits, costs, rules or laws, procedures, information sets, databases and so forth. When an entity is automated we call the resulting software an 'entity component'. Actions of work unit entities cannot be performed by themselves; they always need entities with the right repertoire of possible actions in order to be performed. Actions of work unit components in most cases involve a user (a resource entity) sitting at the computer screen inputting data and pushing buttons on the screen to process inputs and produce results/outputs. An action may also involve other resource entity components to perform functions specific to the entity. Actions are thus performed by action and/or resource entities, specified by an action string. The action string embodies a business rule. A clear methodological separation is maintained between action and resource entities, one cannot be the other. Often it may only be needed to make use of an action entity (and a user) to process information, but the involvement of resource entities makes it possible to keep track of what happens to resources involved in the business process being performed. As said before resource entities may embed functionality particular to the resource. This functionality may be needed to perform a work unit action. From one resource type to another this functionality may be different. A resource entity may be active in different processes. Action entities may therefore share the use of a resource entity with other action entities. Structuring action entities and resource entities separately makes it possible to avoid keeping and processing information about each other in different places. However resources and actions have to know about each other when they interact, but only in a summarized way. When automating the information processing of actions and resources this means that the action knows which resource to call to perform which action with which action string, that the resource receives an interface of a number of information items and that the entity returns state information. Additionally, when the entity components are accurate information processing models of the real world, all information processing for or of the entity can be contained in just one entity component. When, furthermore, such an entity component is capable of handling all like entities, even more simplification is achieved.

Information items of an entity are kept in a database. An action entity is quite different from a resource entity. Action entities process actions for work units like cases, projects, making a product or a series of products or performing a service. In the invention all resource entities have a similar structure. A resource entity type makes it possible to distinguish between one type and the other. Because both action entities and resource entities should make it possible to keep special information items for each type of entity, use is made of *'custom field tables'.* Custom fields are held in a separate details table. An entity may have any number of custom fields which describe attributes or other information of the entity. A custom field is identified by an entity identifier to attach it to the right entity, a custom fields detail identifier, a custom field type identifier and an integer, float, text, money and date value. Depending on what the detail is about, one or more of the value fields are used.

Inputs are processed by action entities to produce outputs or results. Depending on the type of application these inputs must be specific for the action to be performed, giving results which are specific for the action performed. Use is made of *custom input and result*/*output field tables,* which, similar to custom field attribute tables, cater for the application at hand.

An action entity has a repertoire of actions each of which is called by clicking on the corresponding action name on the work unit control component's screen (they are object oriented methods). For making a product, these may be as follows: review plan, produce parts (with a sub produce part), assemble parts, test assembly, finalize product. A click on 'produce part' for instance will lead to retrieval of the actor and action the actor is to perform. In an implementation of the invention this would be a component and the activation of a screen for the 'produce part' action. The screen will show details of the work unit, the resources needed to perform the action (human resources, machines, parts from inventory), details as needed in a custom fields table, inputs to be used or obtained and results to be delivered. Through the calling interface a 'main' action string (business rule) is received by the object (instantiated class) implementing the produce part screen. This action string is read by the object and results in buttons on the screen, when pushed, performing the actions of the main action string. These sub actions may involve resource entities, or not. Other buttons will be shown to process input information. These obtain their 'sub' action strings from a sub action string table, which is set up for that purpose. To customize a system one needs to:
- have an appropriate work unit/action/main action string configuration,
- have a repertoire of actions the action and resource entities should be able to perform,
- set up the sub action string table,
- have custom attribute field and input/result field tables..

A resource entity has a repertoire of actions particular for the resource type. Human resources entities require different actions than machine type resource entities. Action entities should be able to call on these to help perform actions required for the work unit. Particular attributes of resources are implemented as custom fields.

If the standard repertoire of actions of action and resource entities is not adequate, additional actions (methods of the entity class) could be programmed. This can be done by adding them to the original entity component code or by writing a new component which inherits functionality from the original one and adds the required actions.

In an implementation of the method one would have for instance the following components:
- A login main program component which makes use of a users table. This component tests the user name, role and password against the users table for validity and determines to which user group he belongs, which in turn establishes his credentials to access only certain work unit types.
- A work unit entity component which makes use of a template actions table, a work unit table and a work unit actions table.
- Action entity components, one for each type of work unit, for instance produce product(s), perform service(s), perform project(s), handle case(s). Each of these make use of the work unit and work unit actions tables, and also of input, output/result and custom field tables.
- Resource (or asset) components, one for each type of resource (asset) different enough from the other types to warrant a special component, for instance: one for resources like human resources, machines, tools, another for resources like parts, flow oriented resources like gas, electricity, water/fluids, another for monetary resources like financial accounts, another for resources like data sets or information/databases, another for resources like rules and procedures which are not embedded in the system, and finally another for resources like customers and suppliers (relations in general). Each of these makes use of tables identifying the resource and its detail attributes (custom field tables). Some would have a table keeping track of planned and actual usage of the resources. This is needed to perform capacity or enterprise resource planning.
- A setup component to set up the configuration tables.
- A template work unit set up component. This would make use of a work unit template table and associated input and output/result tables.

### Fixed Application Architecture

A fixed application architecture avoids having to design each new application from the start. If each application which automates business processes could make use of the same architecture substantial savings in development time and money would be obtained. Commercially available Enterprise Resource Planning applications, Customer Relations Systems and Supply Chain Management Systems have this objective, but fall short in the possibilities to adapt quickly and cost effectively to new situations. The result is often failed projects, expensive redesign and redevelopment. The invention's objective is to realize substantial benefits by having a much more solid and flexible architecture to cater to different organizational requirements. This is achieved by having a better conceptual framework and a consistent object oriented and component based implementation approach.

The conceptual framework has been described in the above sections. It makes use of six basic concepts: work units, actions, entities, custom business rule processors, custom field tables and custom entity actions. An action is the basic unit of activity, an entity is the basic unit to perform actions, work units identify each separate execution of an action and are the basic unit of work and an action string describes a sequence of actions to be performed by appropriate entities. A top level action may be called a process. Each action can be subbed into a number of sub actions, of which the sequence of execution is defined by an action string. This allows for description of virtually any type of organization. Each action may be performed a number of times, each occurrence is identified by a work unit. The work unit is essential for management of the work. For this purpose it keeps records of start and end times and time and material costs. Each action specifies the actor (action or resource entity) which is responsible for performing the action string that goes with it. The action string may involve any other entity to complete its tasks.

The fixed application architecture of an implementation of the invention involves the following.
- A work unit and work unit actions setup component. These setup templates for work units and work unit actions. New work units may be started (results in a new record in the work unit table) by the user which results in placing the actions for this type of work unit in the work unit actions table. It is also possible to copy a complete set of template work units and their actions from master work unit tables. This would for instance be the case for a complex order to produce a product or a series of products, to perform a complex service, perform a complex project or handle a complex case.
- A work unit entity component. Once the user decides to work on a particular work unit he can select the work unit from a grid presented in a window. From a list in the same window he can select a particular action to perform, depending on the state the action is in.
- Action and resource entity components. A click on the list of actions may result in a call to an action or resource entity, in which case it is the lowest level of the action hierarchy tree, or may give rise to another lower level of work units and their actions. Action entities process inputs and generate the results for a particular work unit. Resource entities handle (sub) actions which relate to resources or assets needed for the action or needed to keep information about the resource or assets up to date.
- A work unit scheduling component. When a work unit is initiated it may be necessary to schedule the use of the resources and inventory or other parts needed for it. The scheduling involves setting up or adapting a time line per resource/assets. The time line has actual and planned start and end times.
- Custom field tables keep attribute data of work units and entities to customize to a particular situation.
- Action string or business rule processors implement the business rules on a per work unit, action and resource entity basis.
- Action entity extensions extend the repertoire of actions of action and resource entities. They can be added as additional methods to existing entities or they can be added as additional methods which inherit from existing entities, if the implementation programming language allows that (Visual Studio.net allows that).

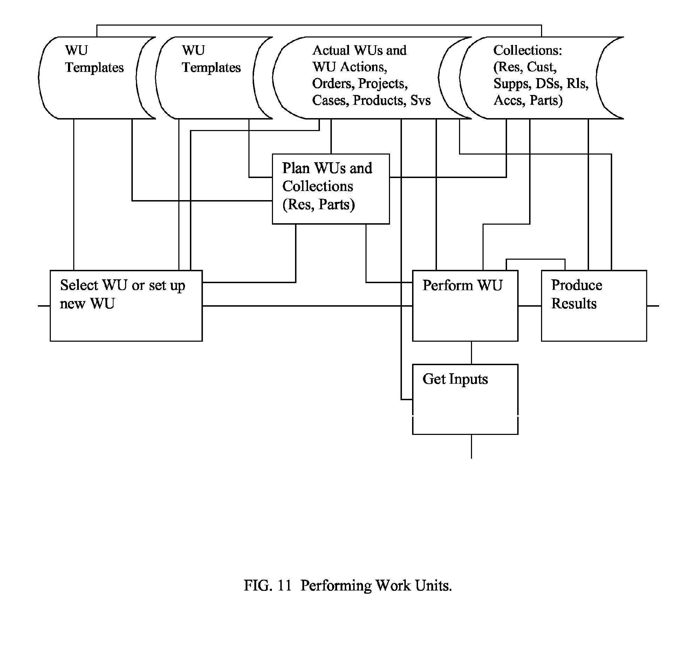

Figure 11 explains how the fixed application architecture works. Sales orders, purchase orders and internal orders start the flow of work. Such an order lists products to make, services to perform, projects to execute, cases to handle (the repertoire of types of work units is limitless, we mention here only four general types of work units). A scheduling type of user inspects the orders to see which have template work units for them and which need to be scheduled for availability of resources, assets or parts/items to use. The availability of parts is known from the inventory entity. The availability of resources is known from the resource entity. Orders for which no templates are available or necessary may be started at the discretion of one of the users. Users may also start work units (for which they have the authority to do so) without the existence of an explicit order. Once the user has selected a work unit to work on, he clicks on the actions to be performed to call on act ion and/or resource entities to perform the action string required. An action of a work unit receives or requests inputs which result in outputs or results which may become inputs for the following action of the work unit, until a final result to be delivered to an internal or external client is obtained. (This figure does not show how tables are a part of entities.)

This mechanism is appropriate for any type of organization. Retail businesses, manufacturing firms, service providers, insurance companies, event organizers (games), government institutions, logistics businesses, all can be modeled with this fixed architecture. In practice, different versions of resources for particular situations would probably exist.

With the method and system presented it is possible to run a number of applications using the same work unit, action and resource entity components without each of them having to have knowledge of each other and of the particular application they are being used in.

### Customization

We summarize below the customization possibilities which make it possible to adapt to different types of organizations. Most of the principles of each have been described in the previous sections. Some notes with respect to implementation of the invention are added at the end.

### Custom Processes and Actions

Each organization is 'special'. They are special for managerial, competitive, historical or cultural reasons. This means that the way products are made and services performed must be identified to the enterprise application. This may be done by programming applications dedicated for the organization or by using the invention. The business processes for the organization or part thereof are identified, described according to the organizational model shown in the sector on that subject and translated in the form the invention requires. This means that an actions table and work unit and work unit action templates are put into a configuration database. The work unit entity component encompasses these tables.

### Custom Field Tables

Often special information items are to be kept of attributes resources, products or services may have. Each of the work unit, action and resource entity components has a table of this type. No new tables need to be set up, but individual attribute names must be given to make it possible for them to be accessed by custom action strings/business rule processors.

### Custom Input/Result Field Tables

Action entities process the inputs to produce outputs or results, which are inputs to next actions to be performed, until a final result is produced for a customer, or internal purpose. These inputs and result field tables are standard available. Customization involves determining how inputs are used to produce results. No new tables need to be set up, but individual inputs and result names must be given to make it possible for them to be accessed by custom action strings/business rule processors.

### Action strings

In this section we will expand on the concepts and definitions given in the section on work units. Our objective is to describe processes ('big' actions), actions and resources. These descriptions can be made as precisely as required. Generally one wants to go not further than is needed for the reader (man or machine) of the description to understand what is meant. A natural language text can consist of 'functional', i.e. 'free' text or can be made more formal, which is the case when detailed descriptions are in order, i.e. a structured natural language. A structured natural language description can be made 'context free', 'complete', 'consistent' and 'correct' like with a programming language. Central to the approach is the notion that networks of actions are performed by actor entities. Action strings are used in the invention to describe processes, actions and business rules which are processed by action string processors. Work unit, action and resource entities all have a number of these 'on board' to handle them.

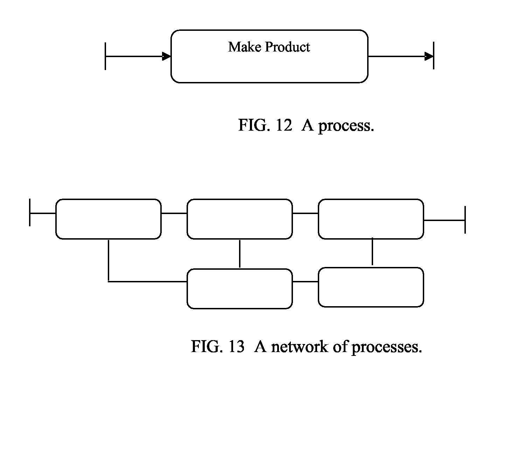

We will first go into some detail about charts.
A simple process, or action chart, showing just 'what has to be done' and not the resources and conditions involved, is depicted in figure 12. We will refer to it as a process.

The rectangle or box with rounded comers is the process. If there can be no confusion a process may be drawn as a rectangle with sharp comers as well. Usually we will show processes and actions as boxes with rounded comers and infrastructures and resources as boxes with sharp comers. An arrow with or without arrow head depicts an input or an output. One arrow may represent one or a number of inputs or outputs, but preferably not both inputs and outputs at the same time. The vertical bar is called a terminator, which is where the picture ends. It does not mean the end of an input or output. In the box a *verb phrase* (or a *gerund phrase* when it says 'making product', but we prefer present tense verb phrases) is shown. It consists of a verb and a noun, these are referred to as an action and an object. The object *receives* the action (in which case it is a recipient resource) or is the *result* of it. An example of an object receiving an action is: 'maintain machine'. The object can thus be either a result or a recipient resource.

Processes work together in networks, as in figure 13. There may be only a few or there may be many processes in a network. Networks may be connected to each other to form bigger networks. Inputs flow to processes, are transformed into outputs which become inputs for other processes.

Generally, inputs come into the picture from the left and leave from the right, but this is not a strict rule. To make clear process charts may mean inputs going from right to left, from bottom to top or following any other path.

The boxes depicting processes may have additional markings: a number or code to identify it uniquely, a symbol to indicate a type of process, like a management, primary or secondary process, a person responsible for the process (process owner), or any other meaningful mark useful in the situation. Arrows may have two or more arrow heads to give additional meaning to inputs and outputs in a process chart. For instance a double arrow head may mean control inputs/outputs, or the flow of a particular material. An arrow may also be 'bold' instead of 'normal', to indicate a particular meaning.

Processes consist of actions which may be shown the same way as processes: in a network of boxes with rounded comers. Processes or actions in a network are not necessarily performed in linear sequence; some are sequential, while others are performed in parallel. Often the sequence may be changed in response to conditions which arise when inputs are obtained, outputs or results are produced. The list of actions of a process (the *action string)* has an *'execution thread',* which depends on results produced or inputs/outputs obtained.

An action may consist of sub actions. One action is specified using one *action sentence,* which may consist of a number of elements, see figure 9. A process may consist of more than one action (an *action string).* The sub actions of an action may also form a network, with its own 'execution thread'. There are no restrictions on the number of levels of the hierarchy of actions. Each level can be 'subbed'. Processes and actions may be viewed as *what* oriented, in the sense that one does not have to have much implementation knowledge to say what needs to be done. The sub level approach allows for wide latitude in design freedom. Processes and actions and their subs can be designed to accurately reflect (mirror) what needs to be done.

*How* to do what needs to be done by whom or what in the organization is specified by actions, to be performed by or on entities (action or resource entities). An example of a free text action sentence is: 'input new orders, using a client file and an inventory file to complete order details and then add a receivable to the general ledger'. Another example is: 'take selected inventory items, assemble them into subassembly components and transport these to the final assembly station'. The entities to be used in the first example could be: sales clerks, orders, inventory, customers and accounts. Entities in the second example are for instance: assembly worker, inventory, assemblies, transportation means, final assembly station. The important thing is that entities are the 'things', capable of performing actual work or receiving work performed to them in the organization. Actions of the first example are:
- add new order, to be performed by sales clerk;
- add customer details to order, to be performed by sales clerk;
- add inventory items to order details, to be performed by sales clerk;
- add receivable to accounts(ledger), to be performed by sales clerk.

Actions of the second example are:
- get inventory items, to be performed by assembly worker;
- assemble sub-assemblies, to be performed by assembly worker;
- transport sub-assemblies to final assembly station, to be performed by factory transport worker.

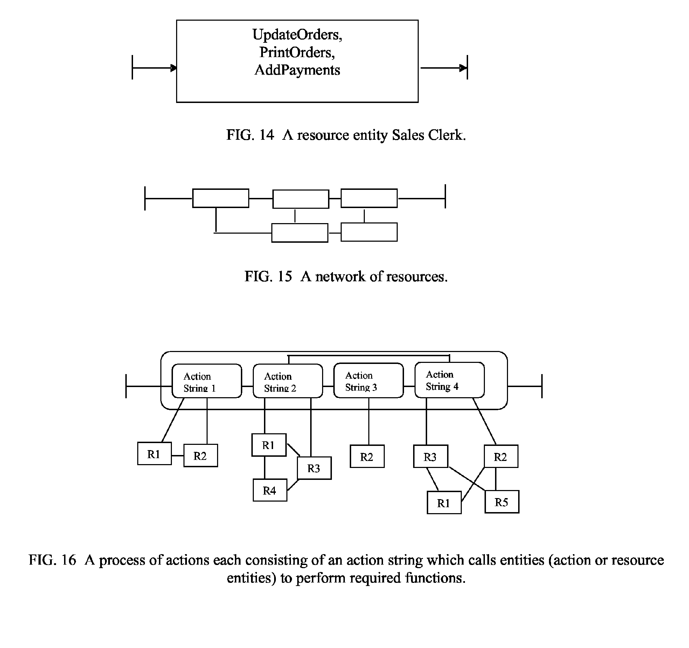

A resource entity is depicted as a box with sharp comers, as in figure 14. The arrows again are inputs or outputs. The text in the entity resource box indicates what the actions are it needs to be able to perform. SalesClerks are really a group or *collection* of resource entities.

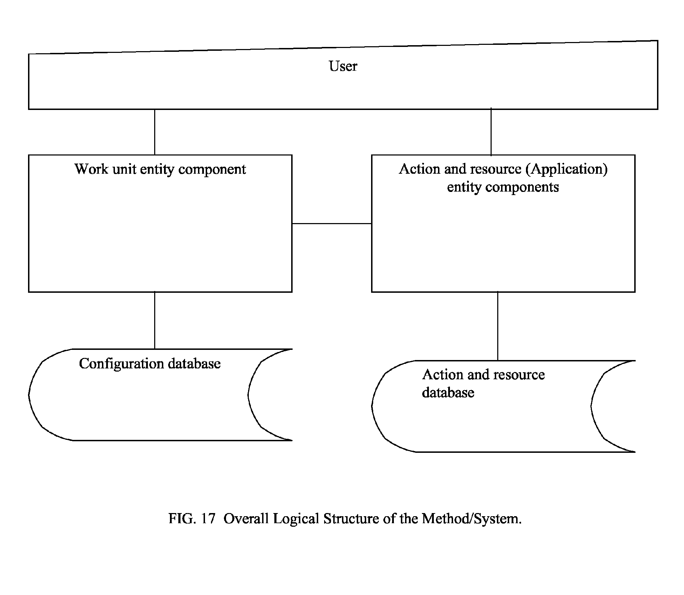

Just as with processes, networks of resource entities may be formed. See figure 15.
A network of action and resource entities performs the actions of an action string consisting of a number of action sentences. Figure 16 clarifies this.

The large box with rounded comers is the process or action. The small boxes inside are action entities which perform sub actions specified by action strings consisting of one or more action sentences. The sub actions may connect to a resource entity which helps perform them. ActionString1 has two sub actions, performed by resource1 and resource2. The output of the action performed by resource is input to the action performed by resource2. Resource1 and resource2 form a resource network. These are shown as rectangles with sharp comers transforming inputs into outputs which are inputs to other resource entities. The sub actions have an 'execution thread', as shown by the lines between them.

Often one first draws the processes, as a general sketch. Then details are added such as inputs and outputs, which are subsequently specified. Then processes are individually drawn, specifying actions, sub actions and action strings and more inputs and outputs, adding appropriate action and resource entities as needed. This is not necessarily only a top down approach. When one finds that certain action and resource entities should be differently structured or used, a bottom up approach may be used to improve the design or description.

An action sentence in structured natural language is for instance:
**Action** ReceiveOrdersByPhone, actor SalesGroup.

This sentence is called a simple action sentence. The actor is: 'SalesGroup', 'ReceiveOrdersByPhone' is the action. To make it possible to be more precise we make use of more formal action sentences, of which a template is shown here:

The elements of a complete action sentence are as follows.
1. The *action,* a present tense verb indicating what is being done, which may need a recipient entity to be readable, as in: 'UseTool'. An action like 'Make' as in 'MakeProduct' needs a result to complete the sentence. Note that we use concatenated verb-entity names to identify actions. This improves readability. Concatenation makes computer parsing of these names easier. There can be only one action per action sentence. The action element of the action sentence is 'Action ActionName,'. A *ForEach* clause may be used to indicate a repeated action, as in: 'Action ActionName ForEach Input,'.
2. The *actor* entity, indicating the name of the action or resource (person, thing, machine) entity which/who starts or executes the action. The actor can be specific as in 'TransformProgram', 'John' or a role name like 'LatheOperator'. The actor can also have states which may influence the actions being performed. For instance a resource's capacity may be exhausted, preventing further actions to be performed. There may be only one actor per action sentence. The actor element of the action sentence is 'Actor ActorName,'.
3. The *recipient* entity(ies), necessary for or receiving the (result of the) action. The recipient(s) name(s) can be specific or be a role. When the action is given a verb-entity name, the recipient may not be needed any more or should be more specific. For instance the action UseTool could have a recipient Screwdriver. The action MakeCar may not need a specific recipient. Recipients also may have states which modify behavior. As described before a recipient performing an action in response to a previous action, should be described as a separate action with the recipient as the actor. There may be several recipients in an action sentence. Recipients may be action or resource entities. The recipient element of the action sentence is 'Recipient RecipientName,'.
4. The *input,* a product, material, information, money, to be processed to which the action is applied by the actor. It could also be an event or trigger to start the action, like an alarm, arrival of something, etcetera. Often it is necessary to indicate where the input came from, in which case we add *from,* followed by the name of the action or resource where it came from. It may also be necessary to specify a condition to be able to select from among possible inputs, we then add a *where* clause followed by a condition. There may be any number of inputs in an action sentence. The input element of the action sentence is 'Input InputName From ActionName,'.
5. The *result* or *output,* a product, material, information, money resulting from the action. The result can also be a state change of the action or some resource. Often we need to say where the output is going in which case we add *to* followed by the name of the action or resource to where it goes. It may also be necessary to specify a condition to be able to select where the output/result is to be applied, we then add a *where* clause followed by a condition. There may any number of outputs in an action sentence. The result element of the action sentence is 'Result ResultName To ActionName,'.
7. *Conditions,* like: the action only executes when something is true, or the performance has to be according to some rule or requirement. There may be any number of conditions in an action sentence. The condition element of the action sentence is for instance 'Condition InputName=SomeValue,'.
8. *State,* the action may go through several states before it completes. This state may be used by other actions or by the action itself to start actions or raise events. The state of the action may also be a result of the action. It will be necessary to indicate the condition to be fulfilled for the action to enter into the named state. For this we use *when* to specifiy the condition. There may be any number of state elements in an action sentence. The state element of an action sentence is for instance 'State CompletionState=Done When AllResultsDelivered,'.
9. *Next,* what is to happen next, after completion of the action, dependent on the state of the action, a recipient or actor entity. The action may also spawn more actions along the way to its completion, for instance at the beginning or the end. The action may also have to be synchronized with the completion of the attainment of a certain state of another action or actions. There may be more then one next. The state element of an action sentence is for instance 'Next PrintLists When CalculateInvoices=Done,'. Specifications may apply to any of the elements of the action sentence. For instance 'Actor Operator Specification Operator=Certified,'.
10. Each element may have a specification sub element. *Specifications* exist in a number of types:
   *time* specifications: at, during, from to, etc.;
   *place* specifications: at locations;
   *tool* or *special resource* specifications: with, using, aided by, etc.;
   *rule* specifications: must comply with, etcetera.
   *performance* specifications: similar to a rule, like costs should be less than $1000.
11. Each element may have a *function* sub element, consisting of clarifying free text to any element of an action sentence. For instance 'Function Handles Sales Orders',.

A sentence must have at least one action, the other elements of the sentence may not have to be mentioned. A recipient entity of an action, when needed, is often passive. When an action elicits a response or reacts to the action, i.e. when one entity does something to another and the responding recipient starts to do something, it is said to be an active recipient. The second action or reaction is then described by another action sentence. For instance:
**Action** RetrieveCustomerRecord, actor SIsOrdersComponent.
**Action** AccessDataBase, actor DataBaseSystem.

The RetrieveCustomerRecord action causes the start of the AccessDataBase action of which the actor is DataBaseSystem, which is the 'active' recipient of RetrieveCustomerRecord action. Note that we have left many of the elements of the action sentences out (for clarity). When there is no mention of the next action to be executed, the next in line will be executed.

As stated before an action sentence consists of *sentence elements:*
*Element1, element2, ..., elementn.*
An action sentence ends with a period and begins with the word Action (capitalized). Each element consists of a keyword (action, recipient, input, result, condition, state, next) followed by a space followed by the *element name,* or an *element name followed by an element expression* evaluating to a value and if necessary followed by the keyword *specification,* followed by a space followed by the *specification name and element expression,* immediately followed by a comma, followed by the next sentence element or a period when it is the last element in the sentence. The keyword *when* is used to apply a condition to an element. *Element expressions* may be a value, constant or litoral, or may have some context dependent predefined meaning. For instance:
**Action** PutDownSlab **specification** (Laborers=5),
   **actor** AssignedContractor **when** ContractorState=Available,
   **condition** CityRules=True,
   **recipient** BuildingLot,
   **input** (10 ton PortlandCement, 660 ft Rebar),
   **result** Slab **specification** (50 by 100 ft),
   **output** LaborHrs **where** LaborHrs<=50,
   **condition** NoRain=True,
   **state** Active **when** AtStart,
   **state** Done **when** AtEnd,
   **next** PutUpFrame **when** AllFramersPresent,
   **next** Wait **when** AllFramersNotPresent.
In this action sentence all keywords are bold. Brackets are used to group element names and expressions. Element names are PutDownSlab, AssignedContractor, CityRules, BuildingLot, (10 ton PortlandCement, 660 ft Rebar), Slab, LaborHrs, NoRain, Active, Done, PutUpFrame and Wait. Element expressions are Laborers=5, ContractorState=Available, LaborhHrs<=50, ContractorState=Available, NoRain=True. As was said before not all these elements need to be present in an action sentence, only the action must always be there. In the beginning stages of writing a structured natural language description, one sometimes does not yet know what will be appropriate element names and element expressions. If it is not yet possible to be exact one can replace the sentence element with a free text description in quotes, like: **next** "to be determined", **input** "various materials", or **action** "foundation work". Names and expressions need to be declared to be complete, consistent and correct. In that case a specification can be made executable. Names need to refer to what they stand for, such as a procedure to be followed to produce a result.

When an action sentence does not mention an actor then the actor should have been established previously. What the name of the process or action stands for should be defined in the description of the action repertoire of the actor resource. It may also follow the first occurrence of the action name. For instance:
**Action** GetPurchaseContractPapers, **actor** AdministrativeAssistant.
   **Action** OpenDrawers.
   **Action** PullDrawerHandle.
   **Action** RetrieveFolders, **condition** FolderLabel=PurchaseContract.
   **Action** GiveToManager **specification** Tomorrow.
The process name GetPurchaseContractPapers is defined by the subsequent Actions. The OpenDrawers, PullDrawerHandle, RetrieveFolders and GiveToManager are then names for Actions which are part of the repertoire of things the AdministrativeAssistent is able to perform and need not be further defined. Since the actor AdministrativeAssistant was established in the first action, the following sentences presume the same actor.

The action repertoire of an entity can be described using the same type of action sentence.

The use of 'next' implies the use of action states. The action states can be of any degree of complexity, but it helps to limit the types of states to: inactive, active, done and altdone (the action can have an alternative ending). The same is not always true for resource states. A resource state (for instance 'the machine is busy') is a very useful item to help determine next actions. This provides a way to let actions depend on states of actions, states of resources and conditions. By having action states like 'active' and 'done' it is possible to spawn multiple other actions in parallel. Synchronization is achieved when an action is made to depend on the completion of other actions or the states of certain resources.

Our approach to structured natural language specification of organizational actions identifies not only the actions themselves but consistently also the actors needed for each action. This way what different actors do in an organization (or, for example, a computer program when the structured natural language is used to describe what a program does) is combined in one description. It is also special in that it makes it possible to say to what resource(s) the action(s) is (are) applied (the recipient(s)). By limiting an action sentence to one actor and one action, correctness and consistency are enforced. And by making sure that execution of the actions of an action string always ends with giving back a state of the calling action, integrity is maintained with respect to the progress of the work unit for which the action was called. Additionally, when an action sentence conforming to the approach described is an information processing action it can be represented by an object in object oriented fashion. A class is written for executing various types of action sentences, each of these as a method of the class. This imposes requirements on the way entity details, inputs and results are handled. This is described in the section Entities.

Action sentences may be used to describe processes and actions and are therefore our principal way to describe the activities of an organization. They may be used for high as well as low level descriptions and can be used to describe virtually anything that goes on. For instance the expression 3+2=5 may be expressed as:
**action** Add, **input** (3,2), **result** 5.

A high level management action to control results may be expressed as:
**Action** ManageBusiness,
**input** (RevenueData, CostsData, LedgerTransactions),
**result** (P&L, BalanceSheet),
**state** OK **when** (P&L, BalanceSheet)=Up,
**state** NOK **when** (P&L,BalanceSheet)=Down,
**next** CutCosts **when** state=NOK,
**next** HireSalesMen **when** state=OK.

Our language describes actions of entities controlled by lists of actions (action strings). Comparing this to object orientation the entities are objects (instances of classes representing collections of entities), the actions are methods. The entities have action sentence classes embodied in them. Unique is the way control over calling the objects is obtained and mirroring can be achieved between actual organizational activities and the description. When the description is used to develop an Enterprise Application, a close correspondence between reality and application is possible. Because each action is set up according to a fixed format or template (action sentences consisting of the sentence elements described above) a high degree of generalization is possible in designing entities, as long as they are centered on executing actions.

In addition to what was said in the previous section about control of processes and actions we go into a bit more detail about the control of sequences of processes and actions.

We will introduce a few more main concepts:
- user control, where a user is in control of the execution of processes and actions, and
- system control, where the system implementing the processes and actions is in control, and combinations of these, being the usual case.

As described above an action string consists of one or more actions to be executed in some sequence, the *execution thread.* To make things simple we give an action sentence in *informal* natural *or functional* language, as in the following example.
The nurse takes the patient's temperature and checks his/her heart rate on the heart rate monitor, recording them using her PDA (Personal Digital Assistant).

The next action to be performed may be:
The nurse bathes the patient and checks his/her bandages.

This may be a sufficient description of things to do as part of an action 'perform morning duties'. The nurse is intelligent and knows what it all means and when to warn a doctor. First we identify resources involved, then we determine what appropriate actions are to be performed by the resources. Resources are: the nurse, the patient (may not be so much a resource, but an entity nonetheless), a heart rate recorder, a thermometer and a personal digital assistant. More resources are involved, like the bed the patient is in and the room, but we limit ourselves now to the most important ones.

The nurse, the actor, is in charge and controls the execution sequence of the actions in the action string. She performs the actions to a patient (the recipient resource), using a thermometer (not mentioned, because it is not needed to keep track of the actions of each thermometer), also using a heart rate recorder (we want to keep track of those), and using her PDA, of which there are a number in use to record data for storing in a central database. Actions TakeTemperature, CheckHeartRate and RecordDataPda produce results or outputs. Depending on the nature of the action appropriate rules are followed for recording these, like recording temperature and heart rate in the patients record and sending the inputted data to some central database by use of the PDA.

Resources are thus nurses, patients, heart recorders and PDA's. The assumption is that each resource has intelligence, meaning it has a repertoire of actions it can perform. Even an office is able to perform an action, being for instance 'ProvideSpaceForConference'. Each action string consists of a number of actions, each having only one actor and zero, one or more recipient resources.

The sentences as shown above do not indicate which nurse or which patient is active. How this information is supplied depends on the type of control implemented (which work unit is started). *User control* means that the user, in this case the actor, is responsible for supplying this information, either explicitly or implicitly as a consequence of the availability of other information. The user is also responsible for starting and ending an action like TakeTemperature or CheckHeartrate. They are events, which mark the beginning and end of actions.

*System control* is different in the sense that the system starts each action, under control of the actor beginning an action. The system is then responsible for the collection of data needed to complete the action. A completely automated nurse robot would maybe be capable of doing that. Complete system control is probably only possible in automated processes. Usually a combination of user and system control is needed.

An actor in control of an action may set a completion state, like done, not done, problem, active or suspended. This state may be used to control the sequence of execution of the actions, as follows.
**Action** 1,
**next** Action 2 **when** CompletionState=Done,
**next** Action 1 **when** CompletionState=AltDone.
**Action** 2,
**next** Action 2 when CompletionState=Done,
**next** Action 3 when CompletionState=AltDone.
**Action** 3,
**next** None.

The 'next' after the Action 1 (for clarity we leave out resource/action details here, and use only the action sentence name '1') indicates the next action sentence to be executed when it is normally Done. In this example Action 2. If the action has been AltDone the same Action 1 will be called upon. Action 2 is executed repetitively at Done completion, but Action 3 is executed upon AltDone completion. Action 3 is the end of the execution of the three actions, because next is None.

Action sentences may be described using informal natural or functional language, or may be more formally described, using the template described before. The first approach is user friendly and allows easy discussion and review, the second approach is necessary when a more exact approach is required as is for instance the case when the description is used to implement an information system to support the processes under consideration.

The execution of processes and their actions may have to be limited to only certain users/resources. This can be described by grouping users (or more generally 'controlling' resources), into user roles and assigning these roles rights to execute processes/actions. A role has only rights to access information or execution rights of the actions of certain processes and not others. Additionally a process or action can be assigned an individual execution right which differs from the execution rights of the other actions of the process in order to be able to build in approval schemes, actions which can be performed only by staff with special qualifications. To implement this it is helpful to use only RoleNames as actor names.

Limiting execution rights to certain roles is referred to as *role based security.*

An action sentence specifies the action that the actor resource is to perform, making use of or working on one or more recipient resources. For instance in the following action string:
**Action** CallSalesOrderModule, **actor** User.
**Action** EnterNewOrders, **actor** User, **recipient** OrderEntryScreen.
**Action** ApplyNewOrders, **actor** SalesOrderEntity, **result** UpdatedSalesAccount.
**Action** PrintOrders, **actor** AccountingEntity.
new sales orders must be booked to the general ledger sales account. Two possibilities exist for dealing with the sales orders to be booked:
- the entity SalesOrderEntity carries out the details of the transaction, or
- the entity SalesOrderEntity supplies the raw data to the entity AccountingEntity, which then carries out the details of the transaction.

In the first case the SalesOrderEntity must have knowledge of the way the sales orders are to be booked. In this case the entity SalesOrderEntity does not have to interface with the entity AccountingEntity. In the second case the information is simply sent to the AccountingEntity, which then applies the data to the right accounts, in other words lets the AccountingEntity take care of it. In our approach we will assume that the designer of SalesOrdersEntity and the designer of the AccountingEntity make use of 'interface specifications'. Associated with each action requiring (a) resource(s) other that its own (as is the case in our example) one or more interfaces must be defined. In our example where the details of the transaction are carried out by SalesOrdersEntity this may look like the above action sentence. When the second approach is followed, the details of the transaction are carried out by AccountingEntity; this may look like:
**Action** CallAccountingEntity, **actor** User.
**Action** EnterNewOrders, actor User.
**Action** ApplyNewOrders, **actor** SalesOrderEntity, **result** OrderInformation.
**Action** BookNewOrders, **actor** AccountingEntity, **input** OrderInformation.
**Action** PrintOrders, **actor** AccountingEntity.

Additional information will have to be supplied as to field types (string, money, integer, etc.), which we leave out here. In each case the AccountingEntity needs to know what to expect.

To design processes, actions and resources, a number of considerations may be made.

When designing a new organization, one of the most important starting points is the objective to be achieved. An objective is formulated as a condition: the organization must produce products with a profit. This rather general objective will not get us much closer to an organizational structure, but the objective: produce electronic organs with a 35% gross profit will get us started. The approach is to decompose the objectives into other lower level objectives, which eventually lead us to a process structure, consisting of processes, actions and resources.

When redesigning an organization there is an existing structure to start with, but there is also an objective, or an improvement objective which must be fulfilled. Decomposition is the way to get to a desired structure, which must be integrated with or put in place of the existing structure.

Concentration on the real problem is in order, to not get lost in other things, but there must be a vague boundary around the problem to make sure real problems just outside the problem at hand are not lost. Thus a *problem area* needs to be established, as well as an *area of consideration.*

Decomposition is defined as replacing a word by two or more words at a lower level in a hierarchy of words. This applies to action words as well as to entity or resource words. The word 'make' may be decomposed in 'assemble' and 'test', or 'get ingredients', 'mix' and 'bake'. An entity like 'assemblyteam' may be decomposed in: 'inspectors', 'collectors', 'assemblers'.

Decomposition applies to:
1. actions, like in 'heal' becomes: 'operate' and 'recuperate';
2. resources, like in 'document' becomes: 'cover', 'contentpages';
3. specifications, like in 'fast' is 'by car', or 'electrical' becomes '10KVA'.

Structuring processes involves:
1. serial and parallel sequencing of actions, as in: 'write' becomes dictate, type, correct and send, are serial actions; 'preparing meal' becomes cook potato's, cook vegetables, broil meat, are parallel Actions;
2. grouping specialized processes/actions into types:
   a. value adding, or primary and secondary, or control and operational processes;
   b. actions oriented towards gaining knowledge, competence or technology;
   c. product or service oriented processes;
   d. market, customer and output oriented processes;
   e. place and time oriented processes;
   f. infrastructure oriented processes;
   g. basic materials and other input oriented processes;
   h. functional processes;
   i. tool and support material oriented processes;
   j. legal and fmance oriented processes;
   k. size and management oriented processes;
   l. environmental, cultural and historical oriented processes.

Processes may also be obtained by:
1. copying from other existing processes inside or outside the organizations;
2. modeling, as in: assembly of cars is like the assembly of tractors.

As the reader will have noticed we string action names together, like 'HandleSalesOrders' and capitalize the first character of each word. There is no particular need for it, but it improves readability and recognition of what is meant to happen. The same is done for entity names, like 'SalesOrderModule' or 'LatheOperator'. The design process will be improved by conventions like these. Remember that they are 'names'. What the names stand for can be left to the imagination of the reader or needs to be defined. The need to define and describe decreases as lower levels of actions are reached. 'ManageBusiness' needs more definition and description than 'EatHamburger'.

In an embodiment of the invention to process information for business processes, action strings which specify custom functionality of action and resource entities are handled by *action string or business rule processors,* which are implemented as object oriented classes. An instantiated object of the class handles one specific action string.

Action string processors are implemented as follows. First the action string is decomposed in action sentences. When processing of the sentence is completed the next sentence to be processed is determined depending on the completion state of the one just processed. Then the first (or the next in the sequence) sentence is analyzed to determine action and actor. The action string processor has a repertoire of actor classes it can call and these have a repertoire of actions they can perform. The actor can be another entity component, it can be a class of the entity itself or it can be a special entity which contains all special action sentence processors. If this is the case the actor class to process the action sentence is based on reading, updating, inserting new and deleting rows of items (or records of fields) held in the internal memory of the computer. The input(s) and output(s)/result(s) are rows of items referred to in the action sentence. Calculations involving items are specified as row(item) or something similar. The way the action goes about utilizing the inputs to produce the outputs depends on the action. This way the action sentence does not have to go into the details of the way processing is to take place, it is sufficient to list the inputs to be expected and the outputs to be produced. Basically though one can distinguish two types of actions. The first has only one input and one output, which can involve several or all row items (SalesOrder refers to the currently selected SalesOrder):
**Action** AddRowItems actor SentenceProcessorOne,
   input (SalesOrder(TimeCost),SalesOrder(MaterialCost)),
   output SalesOrder(TotalCost).

The second has a variable number of inputs resulting in one output:
**Action** CalculateTotalPartialDeliveryPrice, actor SentenceProcessorTwo,
   input (SalesOrderDetail(UnitCost), SalesOrderDetail(Number)) where ItemType=Wheels,
   input (SalesOrderDetail(UnitCost), SalesOrderDetail(Number),SalesOrder(Modifier)) where ItemType=Tires,
   result (SalesOrderPartialDelivery(Price)).
The modifier modifies the price according to some formula.

### Custom Entity Actions

Work unit, action and resource entity components have a repertoire of actions they can perform. The actions generally bring up a screen which allows the user to enter inputs and push buttons to produce particular results or output, following a business rule. Sometimes it may be advantageous to extend this repertoire with new actions. This can be achieved by programming additional actions to the entity component. The programmer needs the source code to do this, the resulting code is compiled and a new version of the component is brought into existence. When the components are made using an object oriented programming language this amounts to adding a method to the repertoire of methods of the component. Some programming languages and their operating system interfaces make it possible to add methods to the component without having access to the source code. The new method (action) can be programmed by 'inheriting' from the compiled, binary, version of the component to be enhanced, without the need to have access to be source code. This makes customization easier. An example of such a language is VisualBasic.Net of Microsoft.

### Implementation notes

A number of requirements may be imposed to improve application consistency and ease of processing. These are the following.
- The action string passed on to the entity component has to be implemented in such a manner that the actions of individual action sentences are implemented as *methods* of object oriented *classes.* This leads to one-to-one mapping of actions to methods, thereby avoiding additional design work to implement entity functionality.
- A component implementing an entity type should have only *five basic types of actions* to perform: *read, update,* generate *new* and *delete* row(s) (or record(s)) of database tables, *process* (or transform or calculate) data from table rows. Each component should make it possible to do different things (perform different actions) based on states of actions and/or entities. Process actions may be quite specific for the situation/organization at hand (and together with the types of data in the tables represent most of the business logic of the organization). An action string specifies these actions and is 'transferred' to the component from the work unit component representing a particular action of a work unit, or from an action string table. The action string can be used to completely control what the entity component is to do (which involves script-like compilation by the entity component), can be used to control sequencing of actions only (involving a limited amount of compilation) or can be used for specification and subsequent development by a programmer. Completely automatic processing of an action string makes the entity component an off-the-shelf component. Sequencing of actions makes it necessary to program more details of the entity, and using the action string solely as a specification of work to be done by the component involves still more programming. Even in a case of additional programming, the component implementing an entity type benefits from its template-like characteristics.
- The entity of the particular type (and the component implementing it) should be *non-symbiotic* (or self contained or decoupled). This means that it has a restful state in which the entity does not need to be continuously connected to another entity to maintain up to date information. It may connect to another entity to exchange information, change its operational state or perform some action, but once this is done it should return to its restful state. Changes in other entities which need to result in changes of the entity at hand should be applied the same way. This makes it possible to carry out only one action at a time and propagation of unknown effects of the action to other entity components is avoided, thereby keeping things simple. When, additionally, each sub action of an action returns control to the calling action, no unknown actions in other entity components can be performed.
- Another condition is that *strict action-hierarchy* should be maintained. This means that an action can be decomposed by a number of sub actions and each of these by sub sub actions and so forth. Not all actions or sub actions have to be 'subbed' to the same level; as soon as an appropriate level is reached an action may call an entity component to do its work. Maintaining this hierarchy is needed for the fixed application architecture to work. As soon as an action does something ancillary, outside the hierarchy, the architecture has lost its fixed characteristic and actions can no longer be recursively called. When this is the case more complexity is the result.

The above does not mean that only one user can use the system at one time. For each user a *'current active hierarchy'* must be maintained in which that user can do only one thing at a time. To make sure that one user does not affect the work of another, work units and entities are preserved for use by that user only. A user can release his hold on a work unit or entity to another user. Work units in the currently active hierarchy may be under the control of different users and the degree of control a user has over a work unit is determined by access rights: read, update, create new and/or delete (RUND) rights. Users are grouped in user groups, each having access to a particular set of work units/actions. *Role based security* must be observed.

### Examples

The invention makes it possible to automate widely different types of applications without programming. To give a taste of this the following shows how this would work.

*Insurance.* Central in insurance is the policy for the insurance and the client for whom the policy is written. Using the invention there would be an action hierarchy set up to model the organization of the insurance business. Customers would be handled by the customer resource entity component. A (sales order) work unit would list the different types of policies the customer would buy (if there needs to be more than one). A sales order action entity handles all aspects of the sales order (invoicing, receiving payment, booking into accounts). A policy would be a product work unit to be made (making up the policy). So there would be as many product or policy work units as there are policies. These policies would stay in the system until one is cancelled, or when a certain period after the cancellation has elapsed. To make a policy a number of actions must be performed (checking claims history, credit, payment received) for which inputs are entered and results (policy documents) produced. Custom attribute field tables would describe specifics about policy, sales order and customer entities. Custom input and result field tables make it possible to have the right inputs and outputs for policy action entities. Case work units handle claims. Action strings (business rules) specify how custom fields and input/result fields are used.

*Manufacturing.* A manufacturing business receives sales orders (work units) from customers (resources). A sales order lists a number of individual items, which could be products (work units) to be made and delivered to the customer. A product is made according to a template work unit, consisting of a hierarchy of sub work units and actions. The sub work units need to make use of machine, human, inventory and factory resources (resource entities). Such a template is retrieved and made specific for the sales order at hand (given appropriate identification) and scheduled as to the use of the resources. Then the work units are set up in the work unit entity tables in order to track performance.

*Olympic Games.* A game is a work unit, athletes are resources. Athletes are scheduled with venues and equipment as resources. Games are set up by having an (internal) order specifying which games are to be performed. The country sending an athlete is specified in a custom attribute field of an athlete resource. An athletic team is also a resource. Team members would be specified using custom attribute fields. Scores are results fields of game work units.

*Retail business.* A retail business selling from inventory would have customers (a resource entity) and sales orders (work units) specify items to be delivered from inventory (a resource entity). Depleted inventory items are ordered using purchase orders (work units). Suppliers are resources.

*Hospitals.* A patient is a customer (a resource entity), a sickness case is similar to a sales order (work unit), a treatment is also a work unit. Doctors, nurses, operating rooms and hospital beds are resources. Resource scheduling matches doctors, nurses, treatment spaces and equipment time. Medicine is obtained from an inventory (resource) entity.

### Description of remaining figures

FIGURE 17 gives an overview of the Overall Logical Structure of the System. The work unit entity component interfaces with the user who selects work units to work on, provided by the configuration database. Subsequently the user selects an action of the work unit to perform. The work unit entity component retrieves an action string (a number of sentences together forming a small program) from the configuration database and calls the actor entity that controls the execution of actions to perform for that action string. The entities being called may interface with the user. The entities make use of the action and resource (application) database which is used for storing persistent application data. Each action has a state associated with it. The states determine the next actions to perform. The user can or must exercise judgment to control the sequence of executing actions, making for user involvement, if desired, in the course of events.

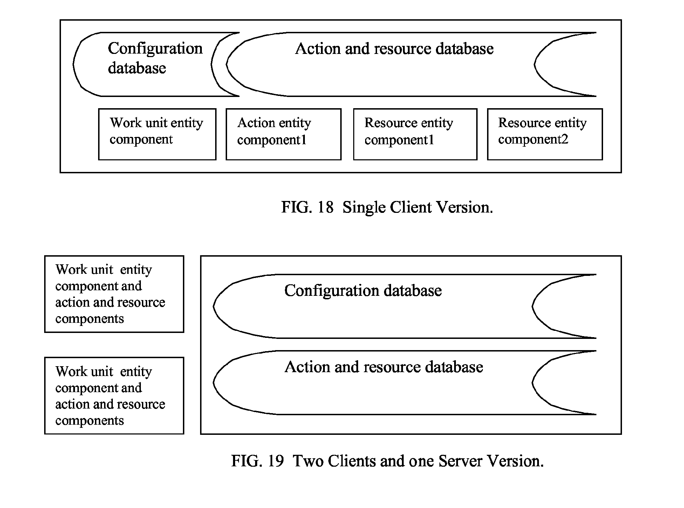

FIGURE 18 shows a single user implementation of the invention, for instance on a personal computer. There is the work unit entity component which is a master control program for controlling all work units and actions which take place. The work unit entity component will typically be loaded from the personal computer's disc storage system in main memory of the personal computer. The configuration database will be stored at the same medium. The action and resource entity components, which each consist of a separately loadable program, are also loaded in the personal computer's main memory from the disc storage system. The action and resource database is also stored on the personal computer's disc storage system. The entity components interact with the configuration and action and resource (application) databases.

FIGURE 19. This figure shows a multi-user implementation involving two users (but there could be many), each using for instance a personal computer, and a server computer which contains the configuration and action and resource databases. The work unit entity component and the action and resource entity components are loaded in the user' personal computer' main memory from the disc storage system on the personal computer. (They could be loaded from another or the same server computer as well.) Users interact with the work unit, action and resource entity components, which in turn interact with the configuration and action and resource databases.

FGURE 20. This figure shows a distributed Internet based implementation. It shows three users each using for instance a personal computer, interacting with the system using browsers. Configuration and action and resource databases are located on different server computers (but could be located on the same server computer). Work unit, action and resource entity components are located on another server computer from where they access configuration and action and resource databases. The work unit, action and resource entity components may also be located on as many servers as are needed to insure adequate response time. If needed the action and resource database can be split in several databases to improve performance. A web server is employed to direct traffic to users and servers.

FUGURE 21 shows a distributed application which is not Internet based. It shows users each using a personal computer workstation, interacting with the system through a distributed computer network (for instance .Net, COM+ or Corba). Each user's workstation has a copy of the work unit entity component part installed, but the application part (action and resource entity components) is installed on one or more servers (which could also hold the configuration and action and resource databases, but this is not necessary. The user's work unit entity component interfaces with the action and resource entity components on the server(s).

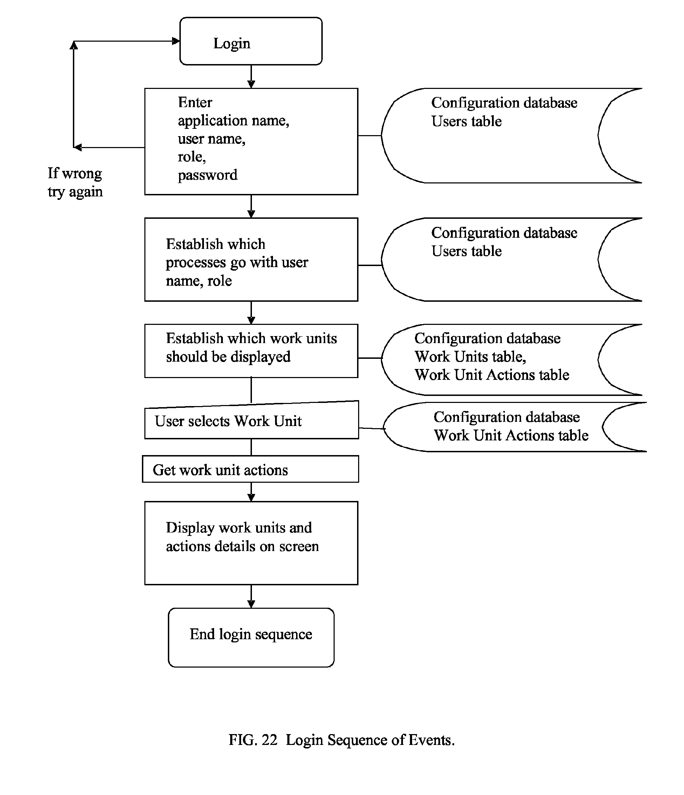

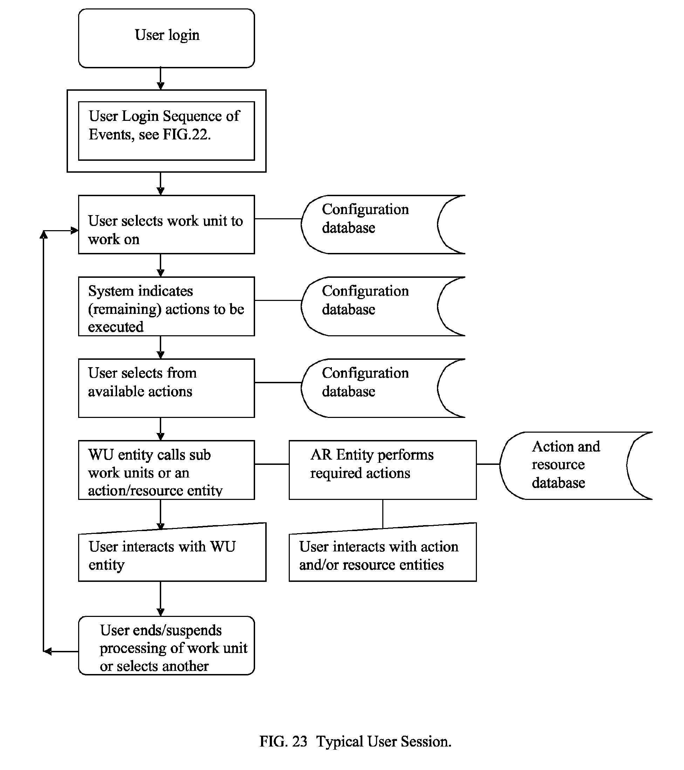

FIGURE 22 shows details of a typical user login sequence. After supplying the application name, the users name, role and password the configuration database is accessed to find the types of processes/work units the user is allowed to work on. A role is for instance 'order entry employee', 'chief scientist', 'administrative manager', 'programmer', 'accounts receivable clerk', etc. The work units the user may work on are retrieved from a work units table in the configuration database. After login the screen shows two main sections: work units and actions. A number of buttons allow the user to select work units, update work unit details, add work units, delete, end or suspend work units, delete/update work units, select actions to be executed. See the action string below. WU stands for work unit.
**Action** UserLogin, actor User, recipient WUEntityComponent, input (Application, UserName, UserRole),
result LoginAcceptedCode specification (LoginAcceptedCode=OK or NOK),
result UserRoleGroup specification (determines which work units to show) when
LoginAcceptedCode=OK,
result NOKMessage specification (tells user login info incorrect) when
LoginAcceptedCode=NOK),
next ShowWorkUnits when LoginAcceptedCode=OK,
next UserLogin when LoginAcceptedCode=NOK.
**Action** ShowWorkUnits, actor WUEntityComponent, input UserRoleGroup,
result WorkUnitsGrid specification (work units retrieved from work unit table).
**Action** SelectWorkUnit, actor User, recipient WUEntityComponent,
input UserClick specification (on work unit row in grid),
result ActionList specification (actions as belong to work unit).

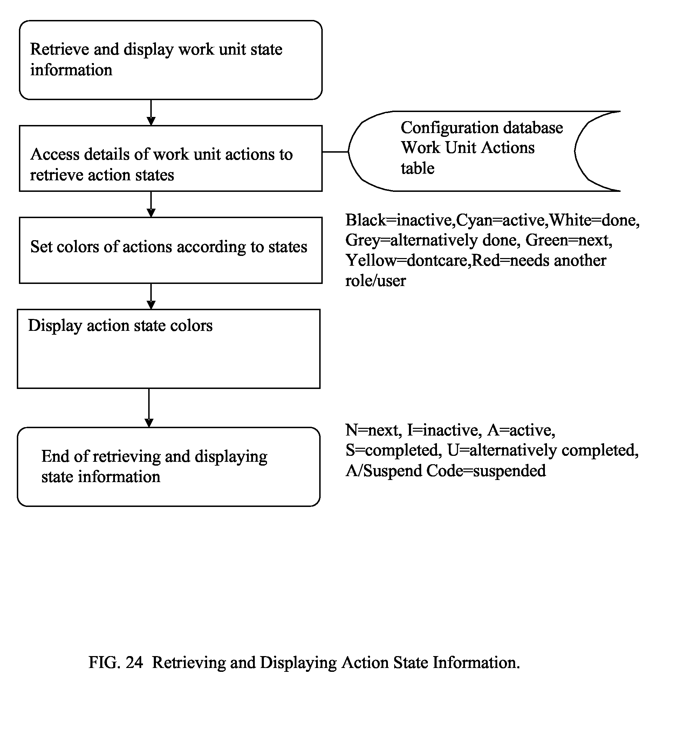

FIGURE 23 and 24 give an overview of a typical user interaction. The user logs in with a desired application to access, a user name, a role and a password. User name, role and password determine the type of work units the user is allowed to work on. There may be many work units. For instance if there is a process (or action) 'order entry' then this process may have many orders associated with it. Each of the orders in this instance is a work unit (a unit work unit). In another instance one work unit may be all orders to be processed in the month of January (a batch work unit). When the user selects a work unit from this list, the actions associated with this type of work unit are shown. See figure 6 for explanation. Each action is shown by a name, and has a color indicating the state of the action. The user selects from the available actions which starts execution of the action string for this action or calls another lower level set of work units. If an action string is to be executed the work unit entity component calls an action or resource entity component, with which the user may have to interact, after which the user or the resource itself can decide what completion state the calling action should have and control is returned to the work unit entity component. The completion state is used to determine the next action or to alter the sequence of execution of actions of the work unit. This depends on the action string of the calling work unit. The user may then suspend the work unit he is working on and start on another work unit, or he may continue with the next action to be executed of the work unit he was working on. See below for the case when a resource entity component is called (not a sub work unit). WU stands for work unit, AR for action or resource.
**Action** SelectAvailableAction specification (availability depends on the state of the action which may be color coded: green for next, cyan for active/suspended, yellow for doanytime), actor User, recipient WUEntityComponent, result SelectedAction.
**Action** CallAREntityComponent specification (SelectedAction determines which AREntity),
actor WUEntityComponent, input SelectedAction,
result AREntityComponentState=Active,
result WUEntityComponent State=Inactive.
**Action** PerformActionStringActions, actor AREntityComponent, condition AccessRights=OK,
result AREntityComponentState=Done.
**Action** DisplayActionReturnStateForm, actor AREntityComponent, condition UserDirected=true.
**Action** InputActionReturnState, actor User, recipient AREntityComponent,
input ReturnState specification (done, altdone, active),
result AREntityComponentState=Done,
result WUEntityComponent=Active.
**Action** ProcessActionReturnState, actor WUEntityComponent, input ReturnState,
result UpdatedActionList specification (depending on the state an appropriate color is set and a next action is determined).
**Action** SelectNextAction, actor User, recipient WUEntityComponent,
condition (User continues with same work unit).
**Action** SuspendWorkUnit, actor User, recipient WUEntityComponent,
condition (User wants somebody else to be able to continue with this work unit at a later time),
result WorkUnitState=Suspended.
**Action** CloseWorkUnit, actor User, recipient WUEntityComponent,
condition (User is finished with this work unit),
result WorkUnitState=Closed.
**Action** SelectOtherWorkUnit, actor User, recipient WUEntityComponent,
condition (User wants to work on other work unit).

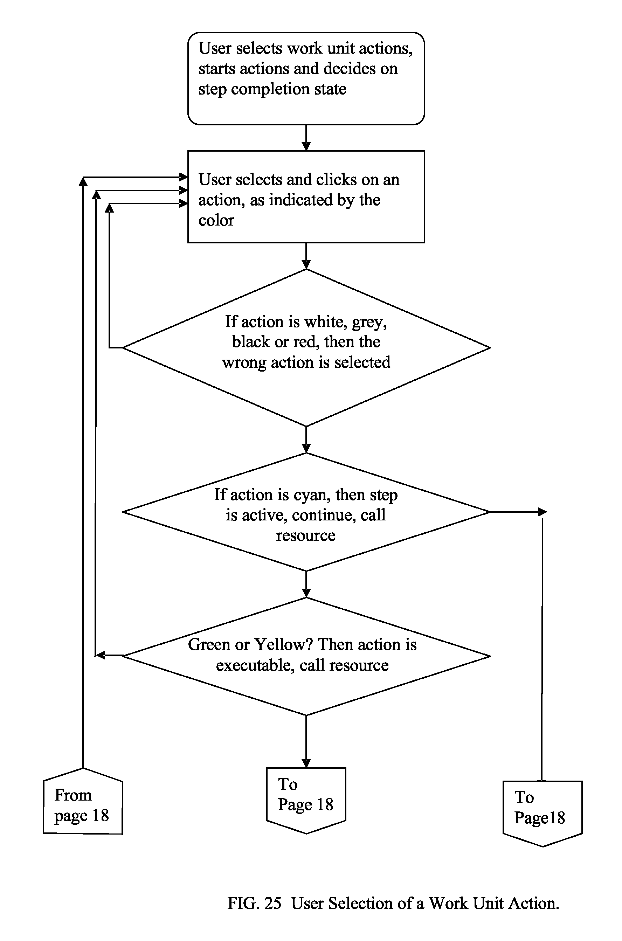

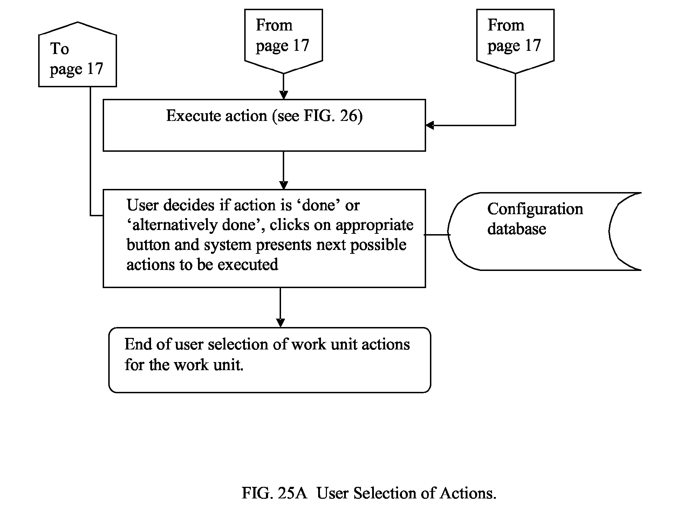

FIGURE 25. This figure gives somewhat more detail of the actions in figure 24. As mentioned the states of the actions of a certain work unit are shown visually on the screen, in one implementation as colors of the action names. An action name may be black, indicating the action is inactive, cyan when active or white when the action is completed. The action color is grey when the action has been alternatively completed. The user or the system can (as shown above), after completion of the execution of the action string, decide if the action is normally completed, or alternatively normally completed. (See also the description of figure 7). An action name is green when it is the next action to be performed. More than one action name may be green. An action name is yellow when the sequence in which the action is to be executed doesn't matter (doanytime). An action is red when it cannot be executed by the present user. Another user or group of users may have authority to execute this action. This is for instance useful when another user, say a manager, must approve the result of a certain action.

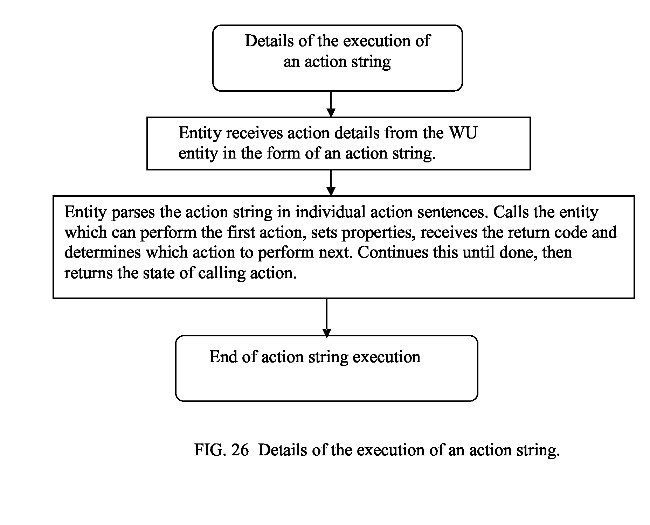

FIGURE 26. The execution of an action string is the subject of this drawing. An action string is, as explained before, a specification of actions to be performed as part of an action of a work unit. The action string is stored in the configuration database and retrieved when the work unit entity component sets up all the actions to be executed. Each action in the action string is represented by an action sentence. This sentence is a structured natural language sentence of elements, each consisting of a keyword and a name.

The work unit entity component, which calls the actor action or resource entity, does not have to be designed with knowledge of the entity component, only the name must be known. When the action string is retrieved from the configuration database the work unit entity component calls the actions by name which is a variable and passes on the details of the sentence. This means that any number of applications can be realized with just one work unit entity component and a set of appropriate action and resource entity components. This is very much in line with the 'real' world, where many types of organizations can be implemented with a particular set of resources. To make this possible the invention also embodies a parser for action strings (action string processors). Since the structure of a sentence complies with strict format rules, it is possible to retrieve the information needed for execution of actions.

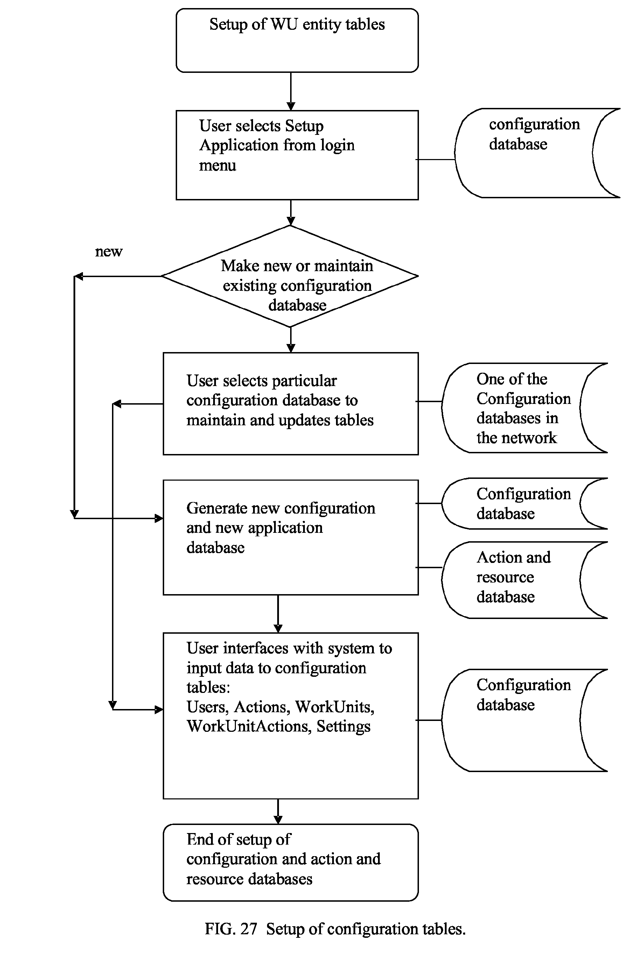

FIGURE 27. This figure gives details of the enterprise application setup procedure. Setup work unit(s) are selected when the login menu specifies an administrator and thus requires that the appropriate administrator names/roles and passwords are setup. The user can give a name to a new application, generate a configuration and action and resource database and fill tables to set up the configuration database. The configuration database needs inputs to four tables in order to set it up. First the user's table must be input, then the template actions table, then initial work units table and initial work unit action table. The setup application can also be used to make changes to the configuration database and the action and resource tables to be used. This can be done in such a manner that immediately after the changes have been input, work can continue according to the changed tables. User interaction will have to be stopped for the time it takes to make the change, but not longer.

## Claims

1. A method to help manage business processes, also called actions, where each action can be decomposed into other actions allowing for hierarchical or tree like descriptions of all relevant actions to be performed in an organization or part thereof whereby each separate execution of an action is identified as a work unit and administered by a work unit entity, allowing for keeping data about its operation.

2. A method as in 1 where the sequence of execution of work units of actions of a higher level work unit of an action is dependent on the completion states of lower level work units of actions.

3. A method as in 1 where only the work unit actions of the lowest level of the action hierarchy or the tip of the branches furthest from the tree root, process inputs to produce outputs or results, and the work units for action levels above the said lowest level or the branches leading up to the said tip of the branches, only serve to group work units into parent work units.

4. A method as in 3 where the number of levels or number of branches leading up to the lowest level or tips of branches is not necessarily the same for all work units processing inputs to produce outputs or results.

5. A method as in 4 where the role of a user of the method determines which types of work unit he may have access to and which access rights he has: read, update, add new or delete, and combinations of these.

6. A system as in 1 where each level of the hierarchy or each branch of the tree is handled by a new object of a class of an object oriented software component.

7. A system as in 5 where each level of the hierarchy or each branch of the tree is handled by a new object of a class of an object oriented software component.

8. A method to perform a work unit action by a so called action entity whereby the said action entity has a repertoire of actions it can perform and processes inputs to produce outputs or results for said work unit action where the said repertoire of actions models work unit actions for producing product(s) or performing service(s), internal or external to an organization.

9. A system as in 8 where each action entity component is an object of a class of an object oriented software component.

10. A method to perform a work unit action by a so called resource entity whereby the said resource entity has a repertoire of actions it can perform and processes inputs to produce outputs or results of a collection of same type resources or assets of an organization.

11. A system as in 10 where each resource entity component is an object of a class of an object oriented software component.

12. A method as in 8 whereby the action entity receives an action string from the work unit entity describing a business rule consisting of a list of one or more actions to perform which may call upon other action or resource entities to process inputs to produce outputs or results.

13. A method as in 10 whereby the resource entity receives an action string from the work unit entity describing a business rule consisting of a list of one or more actions to perform which may call upon other action or resource entities to process inputs to produce outputs or results.

14. A method as in 1 where attribute information items of work unit entities are held in tables and each separate item is identified by a unique name and a type name in addition to a fixed set of values of different types describing the attribute.

15. A method as in 8 where attribute information items of action entities are held in tables and each separate item is identified by a unique name and a type name in addition to a fixed set of values of different types describing the attribute.

16. A method as 10 where attribute information items of resource entities are held in tables and each separate item is identified by a unique name and a type name in addition to a fixed set of values of different types describing the attribute.

17. A method as in 1 where input and output or result information items are held in tables and each separate item is identified by a unique name and a type name in addition to a fixed set of values of different types describing the input or output or result.

18. A method as in 8 where input and output or result information items are held in tables and each separate item is identified by a unique name and a type name in addition to a fixed set of values of different types describing the input or output or result.

19. A method as in 10 where input and output or result information items are held in tables and each separate item is identified by a unique name and a type name in addition to a fixed set of values of different types describing the input or output or result.

20. A method and system as in 1 where there exists a table keeping action strings describing business rules which is accessed when the system user pushes a button on a work unit entity screen to retrieve an action string which specifies actions to be performed using attribute and/or input and output or result information items.

21. A method and system as in 8 where there exists a table keeping action strings describing business rules which is accessed when the system user pushes a button on a work unit entity screen to retrieve an action string which specifies actions to be performed using attribute and/or input and output or result information items.

22. A method and system as in 10 where there exists a table keeping action strings describing business rules which is accessed when the system user pushes a button on a work unit entity screen to retrieve an action string which specifies actions to be performed using attribute and/or input and output or result information items.

23. A method as in 1 where template work unit actions are used to set up new work units.

24. A method as in 1 where template work unit hierarchies are used to set up new sets of work units and work unit actions which allow for the production of product(s) or the performance of service(s), where said template work units and work unit actions specify which resources, which parts or one time use items (consumables) are needed to perform the work units, which inputs are needed and which outputs or results are to be produced.

25. A method and system as in 24 to schedule manually or automatically the resources to be used or the parts or consumables to be used.

26. A method and system to process business rules consisting of a string of sentences where each of said sentences describes: an action, its actor which performs the said action and which has one or more execution states, its input(s) and output(s)/result(s) and their origins and destinations when needed by said action, the next action(s) to perform depending on the completion state of said action or the execution state(s) of other actions or other actor(s) or other condition(s), the states of said action during its execution if needed by other actions, receiver(s) of said action if those are not the same as said actor which also has one or more execution states, and condition(s) which must be fulfilled for said action to be performed if any.

27. A method and system as in 26 where said action, said actor, said input(s) and output(s)/result(s), said completion state, said execution state(s) of other actions, said states of said action during execution, and said receiver(s) are each identified by a name which refers to additional details of the way the object identified by said name is to be used and said condition(s) are identified by a name or by an expression using names and symbols to relate them which evaluates to a true or false condition.

28. A method and system as in 26 where any of said actions may be decomposed into other actions.

29. A method and system as in 27 where said names of said input(s) and output(s)/result(s) refer to a data item identified by said name, a type name and a fixed set of values of different types describing said input(s) and output(s)/result(s).
